# EUROPEAN PATENT SPECIFICATION

(11) **EP 3 026 975 B1**
(45) Date of publication and mention of the grant of the patent: **05.12.2018**
(21) Application number: 13892049.1
(22) Date of filing: 22.08.2013
(51) Int. Cl.: H04W 28/20, H04W 16/18, H04W 16/00

(54) **METHOD AND DEVICE FOR CHANNEL BANDWIDTH SELECTION**
VERFAHREN UND VORRICHTUNG FÜR KANALBANDBREITENAUSWAHL
PROCÉDÉ ET DISPOSITIF DE SÉLECTION DE LARGEUR DE BANDE DE CANAL

(43) Date of publication of application: 01.06.2016
(73) Proprietor: Huawei Technologies Co., Ltd., Longgang District Shenzhen, Guangdong 518129 (CN)
(72) Inventor: JIANG, Yanping, Shenzhen Guangdong 518129 (CN); YANG, Xun, Shenzhen Guangdong 518129 (CN); ZHAO, Mu, Shenzhen Guangdong 518129 (CN)
(74) Representative: Epping - Hermann - Fischer
(86) International application number: PCT/CN2013/082055
(87) International publication number: WO 2015/024229

(56) References cited:
- EP-A1- 1 804 424
- EP-A1- 2 547 063
- EP-A2- 1 931 086
- WO-A1-2008/073657
- CN-A- 101 296 171
- CN-A- 101 558 606
- CN-A- 102 946 639
- US-A1- 2010 317 388
- US-A1- 2011 250 858

## Description

### TECHNICAL FIELD

The present invention relates to communication technologies and, in particular, to a method and a device for selecting a channel bandwidth.

### BACKGROUND

Wireless local area network (Wireless Local Area Network, WLAN) technologies are popularized in market due to characteristics such as wireless advantages, high rate access comparable to a wired network and low costs, and the WLAN technologies have been widely employed in occasions such as homes, schools, hotels and offices at present. With popularization of WLAN networks and unceasing increase of capacity requirements, deployment of the WLAN networks will become denser, and dense deployment has become one of directions focused by a standard study group of a next generation of WLAN currently, i.e. high efficiency WLAN study group (High Efficiency WLAN Study Group, HEW SG for short).

802.11 may currently support several kinds of channel bandwidth such as 20MHz, 40MHz, 80MHz and 160MHz at a frequency band of 5.8GHz. Generally, when performing a bandwidth selection, mainly in consideration of capacity requirements, an access point (Access Point, AP for short) in a WLAN will try to select a large bandwidth for a basic service set (Basic Service Set, BSS for short) that the AP is in. In the prior art, an ultimate goal for channel bandwidth selection is to maximize entire network capacities, however, in a densely-deployed WLAN scenario, if a bandwidth size of a BSS that an AP is in is determined according to a service requirement directly, it cannot be ensured that each BSS can use a channel of large bandwidth separately when service requirements of APs are great and large bandwidths are needed, thus, how to reasonably determine the channel bandwidth used by each BSS becomes an urgent problem.

EP 1931086 A2 describes a method and system for coexistence between 20 MHz and 40 MHz OBSSes in WLANs, in which a system may include a receiving device that may be reconfigured to restrict the RF channel bandwidth utilized for transmitting and/or receiving signals via wireless communication medium based on received information frame.

US 2011/250858 A1 describes a method of wireless communication which includes determining at least one neighboring apparatus from which to obtain information, obtaining information related to a plurality of channels from the at least one neighboring apparatus, selecting a channel from the plurality of channels based on the obtained information, and transmitting on the selected channel.

EP2547063 describes 802.11 type of networks comprising basic service sets that may have overlapped channel bandwidths. The stations determine channel bandwidth based on an interaction and negotiation between a receiver and a transmitter. The transmitter takes the decision based on the acquired information about available channels of both the receiving and the transmitting station.

### SUMMARY

Embodiments of the present invention provide a method and a device for selecting a channel bandwidth so as to reasonably determine channel bandwidths used by BSSs in accordance with the claims.

In a first aspect, a method for selecting a channel bandwidth is provided, including:
acquiring, by a first access point AP in a first basic service set BSS, a priority of a second BSS and a channel bandwidth of the second BSS, where a coverage area of the second BSS overlaps with a coverage area of the first BSS;
if a priority of the first BSS is higher than or equal to the priority of the second BSS, determining, by the first AP, a channel bandwidth that is greater than or equal to the channel bandwidth of the second BSS as a channel bandwidth of the first BSS, and if the priority of the first BSS is lower than the priority of the second BSS, determining, by the first AP, a channel bandwidth that is less than the channel bandwidth of the second BSS as the channel bandwidth of the first BSS.

With reference to the first aspect, in a first possible implementation of the first aspect, after determining the channel bandwidth of the first BSS, the method further includes:
detecting, by the first AP, interference between the first BSS and the second BSS, and if the interference is greater than a preset threshold, performing, by the first AP, at least one of following steps till the interference is less than or equal to the threshold:
reducing the channel bandwidth of the first BSS;
instructing a second AP in the second BSS to reduce the channel bandwidth of the second BSS;
selecting another channel which does not overlap with a channel used by the second BSS;
   and
instructing the second AP to select another channel which does not overlap with a channel used by the first BSS.

With reference to the first possible implementation of the first aspect, in a second possible implementation of the first aspect, the performing, by the first AP, at least one of the following steps till the interference is less than or equal to the threshold includes:
if the channel used by the first BSS overlaps with the channel used by the second BSS, and the channel bandwidth of the first BSS is greater than the channel bandwidth of the second BSS, reducing, by the first AP, the channel bandwidth of the first BSS till the interference is less than or equal to the threshold, or instructing the second AP to reduce the channel bandwidth of the second BSS till the interference is less than or equal to the threshold, or selecting another channel which does not overlap with the channel used by the second BSS, or instructing the second AP to select another channel which does not overlap with the channel used by the first BSS;
if the channel used by the first BSS overlaps with the channel used by the second BSS, and the channel bandwidth of the first BSS is less than or equal to the channel bandwidth of the second BSS, instructing, by the first AP, the second AP to reduce the channel bandwidth of the second BSS till the interference is less than or equal to the threshold, or selecting another channel which does not overlap with the channel used by the second BSS, or instructing the second AP to select another channel which does not overlap with the channel used by the first BSS.

With reference to the first possible implementation of the first aspect or the second possible implementation of the first aspect, in a third possible implementation of the first aspect, the instructing, by the first AP, the second AP in the second BSS to reduce the channel bandwidth of the second BSS includes:
sending, by the first AP, a channel bandwidth adjusting request message to the second AP to instruct the second AP to reduce the channel bandwidth of the second BSS;
the instructing, by the first AP, the second AP to select another channel which does not overlap with the channel used by the first BSS includes:
   sending, by the first AP, a channel reselecting request message to the second AP to instruct the second AP to select another channel which does not overlap with the channel used by the first BSS.

With reference to the third possible implementation of the first aspect, in a fourth possible implementation of the first aspect, the sending, by the first AP, the channel bandwidth adjusting request message to the second AP to instruct the second AP to reduce the channel bandwidth of the second BSS includes:
sending, by the first AP, the channel bandwidth adjusting request message to the second AP directly to instruct the second AP to reduce the channel bandwidth of the second BSS; or
sending, by the first AP, the channel bandwidth adjusting request message to the second AP via an access controller AC or a station STA located within the coverage area of the first BSS and that of the second BSS to instruct the second AP to reduce the channel bandwidth of the second BSS, where the AC is connected to the first AP and the second AP in a wired manner respectively;
the sending, by the first AP, the channel reselecting request message to the second AP to instruct the second AP to select another channel which does not overlap with the channel used by the first BSS includes:
   sending, by the first AP, the channel reselecting request message to the second AP directly to instruct the second AP to select another channel which does not overlap with the channel used by the first BSS; or
   sending, by the first AP, the channel reselecting request message to the second AP via the AC or the station STA located within the coverage area of the first BSS and that of the second BSS to instruct the second AP to select another channel which does not overlap with the channel used by the first BSS.

With reference to the third possible implementation of the first aspect or the fourth possible implementation of the first aspect, in a fifth possible implementation of the first aspect, after the sending, by the first AP, the channel bandwidth adjusting request message to the second AP in the second BSS to instruct the second AP to reduce the channel bandwidth of the second BSS, further including:
receiving, by the first AP, a channel bandwidth adjusting response message returned by the second AP;
after the sending, by the first AP, the channel reselecting request message to the second AP to instruct the second AP to select another channel which does not overlap with the channel used by the first BSS, further including:
   receiving, by the first AP, a channel reselecting response message returned by the second AP.

With reference to the first aspect or the first possible implementation of the first aspect or the second possible implementation of the first aspect or the third possible implementation of the first aspect or the fourth possible implementation of the first aspect or the fifth possible implementation of the first aspect, in a sixth possible implementation of the first aspect, the acquiring, by the first AP in the first BSS, the priority of the second BSS and the channel bandwidth of the second BSS includes:
receiving, by the first AP, a notification message sent by the second AP periodically, where the notification message includes the priority of the second BSS and the channel bandwidth of the second BSS; or
sending, by the first AP, a first acquiring request message to the second AP to acquire the priority of the second BSS and the channel bandwidth of the second BSS, and receiving a first acquiring response message returned by the second AP for the first acquiring request message, where the first acquiring response message includes the priority of the second BSS and the channel bandwidth of the second BSS; or
sending, by the first AP, a second acquiring request message to an AC to acquire the priority of the second BSS and the channel bandwidth of the second BSS, and receiving a second acquiring response message returned by the AC for the second acquiring request message, where the second acquiring response message includes the priority of the second BSS and the channel bandwidth of the second BSS; or
sending, by the first AP, a third acquiring request message to a STA located within the coverage area of the first BSS and that of the second BSS to acquire the priority of the second BSS and the channel bandwidth of the second BSS, and receiving a third acquiring response message returned by the STA for the third acquiring request message, where the third acquiring response message includes the priority of the second BSS and the channel bandwidth of the second BSS.

In a second aspect, a method for selecting a channel bandwidth is provided, including:
detecting, by a second access point AP in a second basic service set BSS, interference between the second BSS and a first BSS, where a coverage area of the second BSS overlaps with a coverage area of the first BSS, and a channel bandwidth of the first BSS is determined by a first AP in the first BSS according to a priority of the first BSS and a priority of the second BSS;
if the interference is greater than a preset threshold, reducing, by the second AP, a channel bandwidth of the second BSS till the interference is less than or equal to the threshold.

With reference to the second aspect, in a first possible implementation of the second aspect, the reducing, by the second AP, the channel bandwidth of the second BSS includes:
receiving, by the second AP, a channel bandwidth adjusting request message sent by the first AP, where the channel bandwidth adjusting request message is used to instruct the second AP to reduce the channel bandwidth of the second BSS; and
reducing, by the second AP, the channel bandwidth of the second BSS according to an instruction of the channel bandwidth adjusting request message.

With reference to the first possible implementation of the second aspect, in a second possible implementation of the second aspect, after the reducing, by the second AP, the channel bandwidth of the second BSS according to the instruction of the channel bandwidth adjusting request message, further including:
sending, by the second AP, a channel bandwidth adjusting response message to the first AP.

In a third aspect, an access point AP located in a first basic service set BSS is provided, where the AP includes:
an acquiring module, configured to acquire a priority of a second BSS and a channel bandwidth of the second BSS, where a coverage area of the second BSS overlaps with a coverage area of the first BSS;
a determining module, configured to, when a priority of the first BSS is higher than or equal to the priority of the second BSS, determine a channel bandwidth that is greater than or equal to the channel bandwidth of the second BSS as a channel bandwidth of the first BSS, or when the priority of the first BSS is lower than the priority of the second BSS, determine a channel bandwidth that is less than the channel bandwidth of the second BSS as the channel bandwidth of the first BSS.

With reference to the third aspect, in a first possible implementation of the third aspect, the AP further includes:
a detecting module, configured to detect interference between the first BSS and the second BSS;
a bandwidth processing module, configured to, when the interference is greater than a preset threshold, perform at least one of following steps till the interference is less than or equal to the threshold:
   reducing the channel bandwidth of the first BSS;
   instructing an AP in the second BSS to reduce the channel bandwidth of the second BSS;
   selecting another channel which does not overlap with a channel used by the second BSS; and
   instructing the AP in the second BSS to select another channel which does not overlap with a channel used by the first BSS.

With reference to the first possible implementation of the third aspect, in a second possible implementation of the third aspect, the bandwidth processing module is specifically configured to: if the channel used by the first BSS overlaps with the channel used by the second BSS, and the channel bandwidth of the first BSS is greater than the channel bandwidth of the second BSS, reduce the channel bandwidth of the first BSS till the interference is less than or equal to the threshold, or instruct the AP in the second BSS to reduce the channel bandwidth of the second BSS till the interference is less than or equal to the threshold, or select another channel which does not overlap with the channel used by the second BSS, or instruct the AP in the second BSS to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the AP in the second BSS to reduce the channel bandwidth of the second BSS till the interference is less than or equal to the threshold, or select another channel which does not overlap with the channel used by the second BSS, or instruct the AP in the second BSS to select another channel which does not overlap with the channel used by the first BSS.

With reference to the first possible implementation of the third aspect or the second possible implementation of the third aspect, in a third possible implementation of the third aspect, the bandwidth processing module being configured to instruct the AP in the second BSS to reduce the channel bandwidth of the second BSS, includes:
the bandwidth processing module is specifically configured to send a channel bandwidth adjusting request message to the AP in the second BSS to instruct the AP in the second BSS to reduce the channel bandwidth of the second BSS;
the bandwidth processing module being configured to instruct the second AP to select another channel which does not overlap with the channel used by the first BSS, includes:
   the bandwidth processing module is specifically configured to send a channel reselecting request message to the AP in the second BSS to instruct the AP in the second BSS to select another channel which does not overlap with the channel used by the first BSS.

With reference to the third possible implementation of the third aspect, in a fourth possible implementation of the third aspect, the bandwidth processing module being configured to send the channel bandwidth adjusting request message to the AP in the second BSS to instruct the AP in the second BSS to reduce the channel bandwidth of the second BSS, includes:
the bandwidth processing module is specifically configured to send the channel bandwidth adjusting request message to the AP in the second BSS directly to instruct the AP in the second BSS to reduce the channel bandwidth of the second BSS; or
the bandwidth processing module is specifically configured to send the channel bandwidth adjusting request message to the AP in the second BSS via an access controller AC or a station STA which is located within both the coverage area of the first BSS and that of the second BSS to instruct the AP in the second BSS to reduce the channel bandwidth of the second BSS, where the AC is connected to the AP and the AP in the second BSS in a wired manner respectively;
the bandwidth processing module being configured to send the channel reselecting request message to the AP in the second BSS to instruct the AP in the second BSS to select another channel which does not overlap with the channel used by the first BSS, includes:
   the bandwidth processing module is specifically configured to send the channel reselecting request message to the AP in the second BSS directly to instruct the AP in the second BSS to select another channel which does not overlap with the channel used by the first BSS; or
   the bandwidth processing module is specifically configured to send the channel reselecting request message to the AP in the second BSS via the AC or the station STA which is located within both the coverage area of the first BSS and that of the second BSS to instruct the AP in the second BSS to select another channel which does not overlap with the channel used by the first BSS.

With reference to the third possible implementation of the third aspect or the fourth possible implementation of the third aspect, in a fifth possible implementation of the third aspect, the AP further includes: a receiving module, configured to, after the bandwidth processing module sends the channel bandwidth adjusting request message, receive a channel bandwidth adjusting response message returned by the AP in the second BSS, or after the bandwidth processing module sends the channel reselecting request message, receive a channel reselecting response message returned by the AP in the second BSS.

With reference to the third aspect or the first possible implementation of the third aspect or the second possible implementation of the third aspect or the third possible implementation of the third aspect or the fourth possible implementation of the third aspect or the fifth possible implementation of the third aspect, in a sixth possible implementation of the third aspect, the acquiring module is specifically configured to receive a notification message sent by the AP in the second BSS periodically, where the notification message includes the priority of the second BSS and the channel bandwidth of the second BSS; or
the acquiring module is specifically configured to send a first acquiring request message to the AP in the second BSS to request to acquire the priority of the second BSS and the channel bandwidth of the second BSS, and receive a first acquiring response message returned by the AP in the second BSS for the first acquiring request message, where the first acquiring response message includes the priority of the second BSS and the channel bandwidth of the second BSS; or
the acquiring module is specifically configured to send a second acquiring request message to an AC to request to acquire the priority of the second BSS and the channel bandwidth of the second BSS, and receive a second acquiring response message returned by the AC for the second acquiring request message, where the second acquiring response message includes the priority of the second BSS and the channel bandwidth of the second BSS; or
the acquiring module is specifically configured to send a third acquiring request message to a STA which is located within both the coverage area of the first BSS and that of the second BSS to request to acquire the priority of the second BSS and the channel bandwidth of the second BSS, and receive a third acquiring response message returned by the STA for the third acquiring request message, where the third acquiring response message includes the priority of the second BSS and the channel bandwidth of the second BSS.

In a fourth aspect, an access point AP located in a second basic service set BSS is provided, where the AP includes:
a detecting module, configured to detect interference between the second BSS and a first BSS, where a coverage area of the second BSS overlaps with a coverage area of the first BSS, and a channel bandwidth of the first BSS is determined by an AP in the first BSS according to a priority of the first BSS and a priority of the second BSS;
a bandwidth processing module, configured to, when the interference is greater than a preset threshold, reduce a channel bandwidth of the second BSS till the interference is less than or equal to the threshold.

With reference to the fourth aspect, in a first possible implementation of the fourth aspect, the bandwidth processing module is specifically configured to: receive a channel bandwidth adjusting request message sent by the AP in the first BSS, where the channel bandwidth adjusting request message is used to instruct the AP to reduce the channel bandwidth of the second BSS; and reduce the channel bandwidth of the second BSS according to an instruction of the channel bandwidth adjusting request message.

With reference to the first possible implementation of the fourth aspect, in a second possible implementation of the fourth aspect, the AP further includes: a sending module, configured to send a channel bandwidth adjusting response message to the AP in the first BSS after the bandwidth processing module reduces the channel bandwidth of the second BSS.

In a fifth aspect, an access point located in a first basic service set BSS is provided, where the AP includes:
a memory, configured to store a program;
a processor, configured to execute the program, so as to be configured to: acquire a priority of a second BSS and a channel bandwidth of the second BSS, where a coverage area of the second BSS overlaps with a coverage area of the first BSS; when a priority of the first BSS is higher than or equal to the priority of the second BSS, determine a channel bandwidth that is greater than or equal to the channel bandwidth of the second BSS as a channel bandwidth of the first BSS, or when the priority of the first BSS is lower than the priority of the second BSS, determine a channel bandwidth that is less than the channel bandwidth of the second BSS as the channel bandwidth of the first BSS.

In a sixth aspect, an access point AP located in a second basic service set BSS is provided, where the AP includes:
a memory, configured to store a program;
a processor, configured to execute the program, so as to be configured to: detect interference between the second BSS and a first BSS, where a coverage area of the second BSS overlaps with a coverage area of the first BSS, and a channel bandwidth of the first BSS is determined by an AP in the first BSS according to a priority of the first BSS and a priority of the second BSS; when the interference is greater than a preset threshold, reduce a channel bandwidth of the second BSS till the interference is less than or equal to the threshold.

In a seventh aspect, a method for selecting a channel bandwidth is provided, including:
receiving, by a channel bandwidth selecting and controlling unit, a bandwidth determining request message sent by a first access point AP in a first basic service set BSS;
comparing, by the channel bandwidth selecting and controlling unit, a priority of the first BSS with a priority of a second BSS, where a coverage area of the second BSS overlaps with a coverage area of the first BSS;
if the priority of the first BSS is higher than or equal to the priority of the second BSS, determining, by the channel bandwidth selecting and controlling unit, a channel bandwidth that is greater than or equal to a channel bandwidth of the second BSS as a channel bandwidth of the first BSS, and if the priority of the first BSS is lower than the priority of the second BSS, determining, by the channel bandwidth selecting and controlling unit, a channel bandwidth that is less than the channel bandwidth of the second BSS as the channel bandwidth of the first BSS.

With reference to the seventh aspect, in a first possible implementation of the seventh aspect, after determining the channel bandwidth of the first BSS, the method further includes:
receiving, by the channel bandwidth selecting and controlling unit, a bandwidth adjusting request message, where the bandwidth adjusting request message is sent by the first AP or a second AP in the second BSS when it is detected that interference between the first BSS and the second BSS is greater than a preset threshold;
performing, by the channel bandwidth selecting and controlling unit, at least one of following steps according to the bandwidth adjusting request message till the interference is less than or equal to the threshold:
   instructing the first AP to reduce the channel bandwidth of the first BSS;
   instructing the second AP to reduce the channel bandwidth of the second BSS;
   instructing the first AP to select another channel which does not overlap with a channel used by the second BSS; and
   instructing the second AP to select another channel which does not overlap with a channel used by the first BSS.

With reference to the seventh aspect, in a second possible implementation of the seventh aspect, after determining the channel bandwidth of the first BSS, the method further includes:
determining, by the channel bandwidth selecting and controlling unit, whether interference between the first BSS and the second BSS is greater than a preset threshold according to information about the interference between the first BSS and the second BSS sent by the first AP and/or a second AP in the second BSS;
if it is determined that the interference between the first BSS and the second BSS is greater than the threshold, performing, by the channel bandwidth selecting and controlling unit, at least one of following steps till the interference is less than or equal to the threshold:
   instructing the first AP to reduce the channel bandwidth of the first BSS;
   instructing the second AP to reduce the channel bandwidth of the second BSS;
   instructing the first AP to select another channel which does not overlap with a channel used by the second BSS; and
   instructing the second AP to select another channel which does not overlap with a channel used by the first BSS.

With reference to the first possible implementation of the seventh aspect or the second possible implementation of the seventh aspect, in a third possible implementation of the seventh aspect, the performing, by the channel bandwidth selecting and controlling unit, at least one of the following steps till the interference is less than or equal to the threshold includes:
if the channel used by the first BSS overlaps with the channel used by the second BSS, and the channel bandwidth of the first BSS is greater than the channel bandwidth of the second BSS, instructing, by the channel bandwidth selecting and controlling unit, the first AP to reduce the channel bandwidth of the first BSS till the interference is less than or equal to the threshold, or instructing the second AP to reduce the channel bandwidth of the second BSS till the interference is less than or equal to the threshold, or instructing the first AP to select another channel which does not overlap with the channel used by the second BSS, or instructing the second AP to select another channel which does not overlap with the channel used by the first BSS;
if the channel used by the first BSS overlaps with the channel used by the second BSS, and the channel bandwidth of the first BSS is less than or equal to the channel bandwidth of the second BSS, instructing, by the channel bandwidth selecting and controlling unit, the second AP to reduce the channel bandwidth of the second BSS till the interference is less than or equal to the threshold, or instructing the first AP to select another channel which does not overlap with the channel used by the second BSS, or instructing the second AP to select another channel which does not overlap with the channel used by the first BSS.

With reference to the first possible implementation of the seventh aspect or the second possible implementation of the seventh aspect or the third possible implementation of the seventh aspect, in a fourth possible implementation of the seventh aspect, the instructing, by the channel bandwidth selecting and controlling unit, the first AP to reduce the channel bandwidth of the first BSS includes:
sending, by the channel bandwidth selecting and controlling unit, a first channel bandwidth adjusting instruct message to the first AP to instruct the first AP to reduce the channel bandwidth of the first BSS;
the instructing, by the channel bandwidth selecting and controlling unit, the second AP to reduce the channel bandwidth of the second BSS includes:
   sending, by the channel bandwidth selecting and controlling unit, a second channel bandwidth adjusting instruct message to the second AP to instruct the second AP to reduce the channel bandwidth of the second BSS;
   the instructing, by the channel bandwidth selecting and controlling unit, the first AP to select another channel which does not overlap with the channel used by the second BSS includes:
      sending, by the channel bandwidth selecting and controlling unit, a first channel reselecting instruct message to the first AP to instruct the first AP to reselect another channel which does not overlap with the channel used by the second BSS;
      the instructing, by the channel bandwidth selecting and controlling unit, the second AP to select another channel which does not overlap with the channel used by the first BSS includes:
         sending, by the channel bandwidth selecting and controlling unit, a second channel reselecting instruct message to the second AP to instruct the second AP to reselect another channel which does not overlap with the channel used by the first BSS.

With reference to the fourth possible implementation of the seventh aspect, in a fifth possible implementation of the seventh aspect, after the sending, by the channel bandwidth selecting and controlling unit, the first channel bandwidth adjusting instruct message to the first AP to instruct the first AP to reduce the channel bandwidth of the first BSS, further including:
receiving, by the channel bandwidth selecting and controlling unit, a first channel bandwidth adjusting response message returned by the first AP;
after the sending, by the channel bandwidth selecting and controlling unit, the second channel bandwidth adjusting instruct message to the second AP to instruct the second AP to reduce the channel bandwidth of the second BSS, further including:
   receiving, by the channel bandwidth selecting and controlling unit, a second channel bandwidth adjusting response message returned by the second AP;
   after the sending, by the channel bandwidth selecting and controlling unit, the first channel reselecting instruct message to the first AP to instruct the first AP to reselect another channel which does not overlap with the channel used by the second BSS, further including:
   receiving, by the channel bandwidth selecting and controlling unit, a first channel reselecting response message returned by the first AP;
   after the sending, by the channel bandwidth selecting and controlling unit, the second channel reselecting instruct message to the second AP to instruct the second AP to reselect another channel which does not overlap with the channel used by the first BSS, further including:
      receiving, by the channel bandwidth selecting and controlling unit, a second channel reselecting response message returned by the second AP.

With reference to the seventh aspect or the first possible implementation of the seventh aspect or the second possible implementation of the seventh aspect or the third possible implementation of the seventh aspect or the fourth possible implementation of the seventh aspect or the fifth possible implementation of the seventh aspect, in a sixth possible implementation of the seventh aspect, the bandwidth determining request message includes the priority of the first BSS.

With reference to the seventh aspect or the first possible implementation of the seventh aspect or the second possible implementation of the seventh aspect or the third possible implementation of the seventh aspect or the fourth possible implementation of the seventh aspect or the fifth possible implementation of the seventh aspect, in a seventh possible implementation of the seventh aspect, before the comparing, by the channel bandwidth selecting and controlling unit, the priority of the first BSS with the priority of the second BSS, further including:
acquiring, by the channel bandwidth selecting and controlling unit, the priority of the first BSS.

With reference to the seventh possible implementation of the seventh aspect, in an eighth possible implementation of the seventh aspect, the acquiring, by the channel bandwidth selecting and controlling unit, the priority of the first BSS includes:
receiving, by the channel bandwidth selecting and controlling unit, a first notification message sent by the first AP periodically, where the first notification message includes the priority of the first BSS; or
sending, by the channel bandwidth selecting and controlling unit, a first acquiring request message to the first AP to request to acquire the priority of the first BSS, and receiving a first acquiring response message returned by the first AP for the first acquiring request message, where the first acquiring response message includes the priority of the first BSS.

With reference to the seventh aspect or the first possible implementation of the seventh aspect or the second possible implementation of the seventh aspect or the third possible implementation of the seventh aspect or the fourth possible implementation of the seventh aspect or the fifth possible implementation of the seventh aspect or the sixth possible implementation of the seventh aspect or the seventh possible implementation of the seventh aspect or the eighth possible implementation of the seventh aspect, in a ninth possible implementation of the seventh aspect, before the comparing, by the channel bandwidth selecting and controlling unit, the priority of the first BSS with the priority of the second BSS, further including:
acquiring, by the channel bandwidth selecting and controlling unit, the priority of the second BSS.

With reference to the ninth possible implementation of the seventh aspect, in a tenth possible implementation of the seventh aspect, the acquiring, by the channel bandwidth selecting and controlling unit, the priority of the second BSS includes:
receiving, by the channel bandwidth selecting and controlling unit, a second notification message sent by the second AP periodically, where the second notification message includes the priority of the second BSS; or
sending, by the channel bandwidth selecting and controlling unit, a second acquiring request message to the second AP to request to acquire the priority of the second BSS, and receiving a second acquiring response message returned by the second AP for the second acquiring request message, where the second acquiring response message includes the priority of the second BSS.

With reference to the tenth possible implementation of the seventh aspect, in an eleventh possible implementation of the seventh aspect, the second notification message further includes the channel bandwidth of the second BSS; or the second acquiring response message further includes the channel bandwidth of the second BSS.

With reference to the seventh aspect or the first possible implementation of the seventh aspect or the second possible implementation of the seventh aspect or the third possible implementation of the seventh aspect or the fourth possible implementation of the seventh aspect or the fifth possible implementation of the seventh aspect or the sixth possible implementation of the seventh aspect or the seventh possible implementation of the seventh aspect or the eighth possible implementation of the seventh aspect or the ninth possible implementation of the seventh aspect or the tenth possible implementation of the seventh aspect or the eleventh possible implementation of the seventh aspect, in a twelfth possible implementation of the seventh aspect, the bandwidth determining request message includes an identification of the second BSS, providing for the channel bandwidth selecting and controlling unit to determine the second BSS.

In an eighth aspect, a channel bandwidth selecting and controlling unit is provided, including:
a receiving module, configured to receive a bandwidth determining request message sent by a first access point AP in a first basic service set BSS;
a comparing module, configured to compare a priority of the first BSS with a priority of a second BSS, where a coverage area of the second BSS overlaps with a coverage area of the first BSS; and
a bandwidth determining module, configured to: when a comparison result of the comparing module shows that the priority of the first BSS is higher than or equal to the priority of the second BSS, determine a channel bandwidth that is greater than or equal to a channel bandwidth of the second BSS as a channel bandwidth of the first BSS, or when a comparison result of the comparing module shows that the priority of the first BSS is lower than the priority of the second BSS, determine a channel bandwidth that is less than the channel bandwidth of the second BSS as the channel bandwidth of the first BSS.

With reference to the eighth aspect, in a first possible implementation of the eighth aspect, the receiving module is further configured to, after the bandwidth determining module determines the channel bandwidth of the first BSS, receive a bandwidth adjusting request message, where the bandwidth adjusting request message is sent by the first AP or a second AP in the second BSS when it is detected that interference between the first BSS and the second BSS is greater than a preset threshold;
the channel bandwidth selecting and controlling unit further includes:
a first bandwidth adjusting module, configured to perform at least one of following steps according to the bandwidth adjusting request message till the interference is less than or equal to the threshold:
instructing the first AP to reduce the channel bandwidth of the first BSS;
instructing the second AP to reduce the channel bandwidth of the second BSS;
instructing the first AP to select another channel which does not overlap with a channel used by the second BSS; and
instructing the second AP to select another channel which does not overlap with a channel used by the first BSS.

With reference to the eighth aspect, in a second possible implementation of the eighth aspect, the channel bandwidth selecting and controlling unit further includes:
an interference determining module, configured to determine whether interference between the first BSS and the second BSS is greater than a preset threshold according to information about the interference between the first BSS and the second BSS sent by the first AP and/or a second AP in the second BSS;
a second bandwidth adjusting module, configured to, when the interference determining module determines that the interference between the first BSS and the second BSS is greater than the threshold, perform at least one of following steps till the interference is less than or equal to the threshold:
   instructing the first AP to reduce the channel bandwidth of the first BSS;
   instructing the second AP to reduce the channel bandwidth of the second BSS;
   instructing the first AP to select another channel which does not overlap with a channel used by the second BSS; and
   instructing the second AP to select another channel which does not overlap with a channel used by the first BSS.

With reference to the first possible implementation of the eighth aspect, in a third possible implementation of the eighth aspect, the first bandwidth adjusting module is specifically configured to: if the channel used by the first BSS overlaps with the channel used by the second BSS, and the channel bandwidth of the first BSS is greater than the channel bandwidth of the second BSS, instruct the first AP to reduce the channel bandwidth of the first BSS till the interference is less than or equal to the threshold, or instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS.

With reference to the second possible implementation of the eighth aspect, in a fourth possible implementation of the eighth aspect, the second bandwidth adjusting module is specifically configured to: if the channel used by the first BSS overlaps with the channel used by the second BSS, and the channel bandwidth of the first BSS is greater than the channel bandwidth of the second BSS, instruct the first AP to reduce the channel bandwidth of the first BSS till the interference is less than or equal to the threshold, or instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS.

With reference to the first possible implementation of the eighth aspect or the third possible implementation of the eighth aspect, in a fifth possible implementation of the eighth aspect, the first bandwidth adjusting module being configured to instruct the first AP to reduce the channel bandwidth of the first BSS, includes:
the first bandwidth adjusting module is specifically configured to send a first channel bandwidth adjusting instruct message to the first AP to instruct the first AP to reduce the channel bandwidth of the first BSS;
the first bandwidth adjusting module being configured to instruct the second AP to reduce the channel bandwidth of the second BSS, includes:
   the first bandwidth adjusting module is specifically configured to send a second channel bandwidth adjusting instruct message to the second AP to instruct the second AP to reduce the channel bandwidth of the second BSS;
   the first bandwidth adjusting module being configured to instruct the first AP to select another channel which does not overlap with the channel used by the second BSS, includes:
      the first bandwidth adjusting module is specifically configured to send a first channel reselecting instruct message to the first AP to instruct the first AP to reselect another channel which does not overlap with the channel used by the second BSS;
      the first bandwidth adjusting module being configured to instruct the second AP to select another channel which does not overlap with the channel used by the first BSS, includes:
         the first bandwidth adjusting module is specifically configured to send a second channel reselecting instruct message to the second AP to instruct the second AP to reselect another channel which does not overlap with the channel used by the first BSS.

With reference to the second possible implementation of the eighth aspect or the fourth possible implementation of the eighth aspect, in a sixth possible implementation of the eighth aspect, the second bandwidth adjusting module being configured to instruct the first AP to reduce the channel bandwidth of the first BSS, includes:
the second bandwidth adjusting module is specifically configured to send a first channel bandwidth adjusting instruct message to the first AP to instruct the first AP to reduce the channel bandwidth of the first BSS;
the second bandwidth adjusting module being configured to instruct the second AP to reduce the channel bandwidth of the second BSS, includes:
   the second bandwidth adjusting module is specifically configured to send a second channel bandwidth adjusting instruct message to the second AP to instruct the second AP to reduce the channel bandwidth of the second BSS;
   the second bandwidth adjusting module being configured to instruct the first AP to select another channel which does not overlap with the channel used by the second BSS, includes:
      the second bandwidth adjusting module is specifically configured to send a first channel reselecting instruct message to the first AP to instruct the first AP to reselect another channel which does not overlap with the channel used by the second BSS;
      the second bandwidth adjusting module being configured to instruct the second AP to select another channel which does not overlap with the channel used by the first BSS, includes:
         the second bandwidth adjusting module is specifically configured to send a second channel reselecting instruct message to the second AP to instruct the second AP to reselect another channel which does not overlap with the channel used by the first BSS.

With reference to the fifth possible implementation of the eighth aspect or the sixth possible implementation of the eighth aspect, in a seventh possible implementation of the eighth aspect, the receiving module is further configured to: receive a first channel bandwidth adjusting response message returned by the first AP; or receive a second channel bandwidth adjusting response message returned by the second AP; or receive a first channel reselecting response message returned by the first AP; or receive a second channel reselecting response message returned by the second AP.

With reference to the eighth aspect or the first possible implementation of the eighth aspect or the second possible implementation of the eighth aspect or the third possible implementation of the eighth aspect or the fourth possible implementation of the eighth aspect or the fifth possible implementation of the eighth aspect or the sixth possible implementation of the eighth aspect or the seventh possible implementation of the eighth aspect, in an eighth possible implementation of the eighth aspect, the bandwidth determining request message includes the priority of the first BSS.

With reference to the eighth aspect or the first possible implementation of the eighth aspect or the second possible implementation of the eighth aspect or the third possible implementation of the eighth aspect or the fourth possible implementation of the eighth aspect or the fifth possible implementation of the eighth aspect or the sixth possible implementation of the eighth aspect or the seventh possible implementation of the eighth aspect, in a ninth possible implementation of the eighth aspect, the channel bandwidth selecting and controlling unit further includes:
a first acquiring module, configured to, before the comparing module compares the priority of the first BSS with the priority of the second BSS, acquire the priority of the first BSS.

With reference to the ninth possible implementation of the eighth aspect, in a tenth possible implementation of the eighth aspect, the first acquiring module is specifically configured to receive a first notification message sent by the first AP periodically, where the first notification message includes the priority of the first BSS; or
the first acquiring module is specifically configured to send a first acquiring request message to the first AP to request to acquire the priority of the first BSS, and receive a first acquiring response message returned by the first AP for the first acquiring request message, where the first acquiring response message includes the priority of the first BSS.

With reference to the eighth aspect or the first possible implementation of the eighth aspect or the second possible implementation of the eighth aspect or the third possible implementation of the eighth aspect or the fourth possible implementation of the eighth aspect or the fifth possible implementation of the eighth aspect or the sixth possible implementation of the eighth aspect or the seventh possible implementation of the eighth aspect or the eighth possible implementation of the eighth aspect or the ninth possible implementation of the eighth aspect or the tenth possible implementation of the eighth aspect, in an eleventh possible implementation of the eighth aspect, the channel bandwidth selecting and controlling unit further includes:
a second acquiring module, configured to, before the comparing module compares the priority of the first BSS with the priority of the second BSS, acquire the priority of the second BSS.

With reference to the eleventh possible implementation of the eighth aspect, in a twelfth possible implementation of the eighth aspect, the second acquiring module is specifically configured to receive a second notification message sent by the second AP periodically, where the second notification message includes the priority of the second BSS; or
the second acquiring module is specifically configured to send a second acquiring request message to the second AP to request to acquire the priority of the second BSS, and receive a second acquiring response message returned by the second AP for the second acquiring request message, where the second acquiring response message includes the priority of the second BSS.

With reference to the twelfth possible implementation of the eighth aspect, in a thirteenth possible implementation of the eighth aspect, the second notification message further includes the channel bandwidth of the second BSS; or the second acquiring response message further includes the channel bandwidth of the second BSS.

With reference to the eighth aspect or the first possible implementation of the eighth aspect or the second possible implementation of the eighth aspect or the third possible implementation of the eighth aspect or the fourth possible implementation of the eighth aspect or the fifth possible implementation of the eighth aspect or the sixth possible implementation of the eighth aspect or the seventh possible implementation of the eighth aspect or the eighth possible implementation of the eighth aspect or the ninth possible implementation of the eighth aspect or the tenth possible implementation of the eighth aspect or the eleventh possible implementation of the eighth aspect or the twelfth possible implementation of the eighth aspect or the thirteenth possible implementation of the eighth aspect, in a fourteenth possible implementation of the eighth aspect, the bandwidth determining request message includes an identification of the second BSS, providing for the channel bandwidth selecting and controlling unit to determine the second BSS.

In a ninth aspect, a channel bandwidth selecting and controlling unit is provided, including:
a receiver, configured to receive a bandwidth determining request message sent by a first access point AP in a first basic service set BSS;
a processor, configured to compare a priority of the first BSS with a priority of a second BSS, where a coverage area of the second BSS overlaps with a coverage area of the first BSS; if the priority of the first BSS is higher than or equal to the priority of the second BSS, determine a channel bandwidth that is greater than or equal to a channel bandwidth of the second BSS as a channel bandwidth of the first BSS, or if the priority of the first BSS is lower than the priority of the second BSS, determine a channel bandwidth that is less than the channel bandwidth of the second BSS as the channel bandwidth of the first BSS.

According to a method and a device for selecting a channel bandwidth provided in embodiments of the present invention, when a first BSS needs to determine a channel bandwidth, compare a priority of the first BSS with a priority of a second BSS, of which a coverage area overlaps with a coverage area of the first BSS; if the priority of the first BSS is higher than the priority of the second BSS, determine a channel bandwidth that is greater than or equal to a channel bandwidth of the second BSS as a channel bandwidth of the first BSS; otherwise, determine a channel bandwidth that is less than the channel bandwidth of the second BSS as the channel bandwidth of the first BSS. Since channel bandwidths of BSSs are determined based on priorities of the BSSs, a BSS with a high priority may thus be guaranteed preferential occupancy of a large bandwidth, and reasonable allocation of the channel bandwidths of the BSSs is achieved.

### BRIEF DESCRIPTION OF DRAWINGS

In order to make technical solutions in embodiments of the present invention or the prior art more clearly, accompanying drawings used for description of the embodiments of the present invention or the prior art will be briefly described hereunder. Obviously, the described drawings are merely some embodiments of present invention. For persons of ordinary skills in the art, other drawings may be obtained based on these drawings without any creative effort.
FIG. 1A is a flow chart of a method for selecting a channel bandwidth according to an embodiment of the present invention;
FIG. 1B is a flow chart of another method for selecting a channel bandwidth according to an embodiment of the present invention;
FIG. 2 is a schematic diagram of a change of a channel bandwidth of a first BSS and a channel bandwidth of a second BSS according to an embodiment of the present invention;
FIG. 3 is a schematic diagram of another change of a channel bandwidth of a first BSS and a channel bandwidth of a second BSS according to an embodiment of the present invention;
FIG. 4 is a flow chart of still another method for selecting a channel bandwidth according to an embodiment of the present invention;
FIG. 5A is a schematic structural diagram of an AP according to an embodiment of the present invention;
FIG. 5B is a schematic structural diagram of another AP according to an embodiment of the present invention;
FIG. 6 is a schematic structural diagram of still another AP according to an embodiment of the present invention;
FIG. 7 is a schematic structural diagram of still another AP according to an embodiment of the present invention;
FIG. 8 is a schematic structural diagram of still another AP according to an embodiment of the present invention;
FIG. 9A is a flow chart of still another method for selecting a channel bandwidth according to an embodiment of the present invention;
FIG. 9B is a flow chart of still another method for selecting a channel bandwidth according to an embodiment of the present invention;
FIG. 9C is a flow chart of still another method for selecting a channel bandwidth according to an embodiment of the present invention;
FIG. 10 is a schematic structural diagram of a channel bandwidth selecting and controlling unit according to an embodiment of the present invention;
FIG. 11 is a schematic structural diagram of another channel bandwidth selecting and controlling unit according to an embodiment of the present invention;
FIG. 12 is a schematic structural diagram of still another channel bandwidth selecting and controlling unit according to an embodiment of the present invention;
FIG. 13 is a schematic structural diagram of still another channel bandwidth selecting and controlling unit according to an embodiment of the present invention.

### DESCRIPTION OF EMBODIMENTS

In order to make objectives, technical solutions, and advantages of embodiments of the present invention clearly, technical solutions in the embodiments of the present invention will be described hereunder clearly and completely with reference to accompanying drawings in the embodiments of the present invention. Obviously, the described embodiments are only a part of embodiments of the present invention, rather than all embodiments of the present invention. All other embodiments obtained by persons of ordinary skill in the art based on the embodiments of the present invention without any creative effort shall fall into the protection scope of the present invention.

In embodiments of the present invention, firstly, a concept of division of BSS priorities in a wireless local area network and a method for identifying and setting the BSS priorities are proposed. A BSS enjoys a higher priority, which means that a device belonging to the BSS is allowed preferential use or occupancy of some spectrum resources over devices of other BSSs. Subsequently, based on the BSS priority, embodiments of the present invention also provide a method for selecting a channel bandwidth. Information related to the BSS priority will be described hereunder firstly.

The BSS priority targets at setting priorities for BSSs. Priorities of different BSSs may vary. The priority of a same BSS will also vary depending on the strategies performed by the BSS. For instance, when considering access control, a priority of a certain BSS may be the highest, that is to say, devices in the BSS may enjoy preferential use of channels; but when considering channel switching, the priority of the BSS may be the lowest, that is to say, the BSS may be requested by a BSS with a higher priority to switch a channel. Thus, priorities may be set more flexibly according to strategies to be performed by a BSS.

A priority of a BSS may be identified by one datum or a group of data. For example, a priority of a BSS is identified by considering the number of associated users in the BSS, the number of active users in the BSS or specified data related to channel selection. For another example, both the number of associated users in a BSS and the number of active users in the BSS may be used to determine the priority of the BSS. For instance, the larger the number of active users, then the higher a BSS priority, and when the number of the active users is same, the larger the number of associated users, then the higher the BSS priority. Besides the above examples, a priority of a BSS may also be identified by the number of associated users in the BSS, the number of active users in the BSS and the specified data related to channel selection, together. In addition, besides the number of associated users, the number of active users and the specified data related to channel selection, other data may also be used to identify a BSS priority.

A priority of a BSS is carried by an AP and a station (Station, short for STA) in the BSS. That is to say, priorities of an AP and an STA in a BSS with a high priority are higher than those of an AP and an STA in a BSS with a low priority. The priority of the BSS is an attribute of the BSS, which is carried by various devices in the BSS; when a certain device departs from a current BSS, and then a corresponding priority is lost.

Based on the above definitions, an embodiment of the present invention provides a method for setting a cell priority, including:
An AC acquires parameters of BSSs required for setting priorities or strategies required for setting the priorities; the AC sets the priorities for the BSSs according to the acquired parameters of the BSSs or the acquired strategies.

The method for setting the cell priority belongs to a center control method. Specifically, priorities are set by the AC for BSSs based on preset parameters, or the priorities are set by the AC for the BSSs based on preset strategies. The parameters required for setting the priorities may vary according to different application scenarios, which, for instance, may include the number of associated STAs, a length of a buffer queue corresponding to BSS downlink services, the number of active STAs, etc. The strategies required for setting the priorities may be set according to billing information of STAs in BSSs or information about operators to which the BSSs belong.

After setting the priorities for the BSSs, the AC may send the priorities of the BSSs to APs in the BSSs to enable the APs to obtain the priorities of the BSSs to which they belong, and thus perform corresponding operations based on the BSS priorities.

Based on the above definitions, an embodiment of the present invention further provides a method for setting a cell priority, including: an AP acquires a priority of a neighboring BSS and a value of a parameter used by the neighboring BSS for setting the priority; then, the AP determines a priority of a BSS to which the AP belongs according to a local value of the parameter, the priority of the neighboring BSS and the value of the parameter used by the neighboring BSS for setting the priority.

The method for setting the cell priority belongs to a distributed method. Specifically, an AP in a BSS of which a priority is about to be set sets the priority of the BSS to which it belongs by referring to a priority of a neighboring BSS, a value of an associated parameter used by the neighboring BSS for setting the priority and a local value of the same parameter. Optionally, before acquiring the priority of the neighboring BSS, the AP may send a priority acquiring request to an AC or an AP in the neighboring BSS to request the priority of the neighboring BSS and the value of the parameter used by the neighboring BSS for setting the priority, then receive a reply message returned by the AC or the AP in the neighboring BSS, and acquire therefrom the priority of the neighboring BSS and the value of the parameter used for setting the priority.

For an STA in a BSS, a priority of the BSS to which it belongs may be obtained using the following modes.

An active acquiring mode: the STA sends a priority request message to an AP. The priority request message may be a new command, or a new field included in a control frame, a management frame or a data frame. For instance, the priority request message may be carried in an association request or a probe request (probe request). The priority request message includes information such as an ID of a BSS and other related parameters. After receiving the priority request message, the AP feedbacks a priority of a current BSS to the STA.

A passive acquiring mode: an AP broadcasts priority information of a current BSS in a beacon frame (beacon frame), a management frame, a control frame or a data frame. The STA receives the beacon frame, the management frame, the control frame or the data frame broadcasted by the AP, and acquires therefrom the priority information of the current BSS.

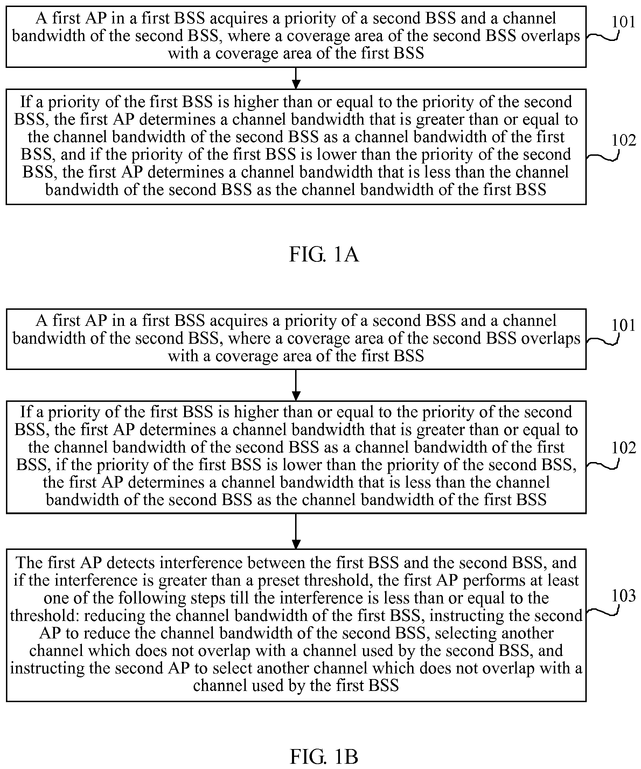

Based on the above BSS priority, an embodiment of the present invention also provides a method for selecting a channel bandwidth, as shown in FIG. 1A, the method includes:
101, a first AP in a first BSS acquires a priority of a second BSS and a channel bandwidth of the second BSS, where a coverage area of the second BSS overlaps with a coverage area of the first BSS.
102, if a priority of the first BSS is higher than or equal to the priority of the second BSS, the first AP determines a channel bandwidth that is greater than or equal to the channel bandwidth of the second BSS as a channel bandwidth of the first BSS, and if the priority of the first BSS is lower than the priority of the second BSS, the first AP determines a channel bandwidth that is less than the channel bandwidth of the second BSS as the channel bandwidth of the first BSS.

In this embodiment, for convenience of description, a BSS which needs to select a channel bandwidth is referred to as a first BSS, an AP in the first BSS is referred to as a first AP, and a BSS of which a coverage area overlaps with a coverage area of the first BSS is referred to as a second BSS, and, likewise, an AP in the second BSS is referred to as a second AP. The coverage areas of the two BSSs overlap with each other, which may briefly be referred to as the two BSSs being neighboring. A scenario where a channel bandwidth needs to be selected is illustrated: for example, channel selection needs to be performed when a first BSS is established, and a problem of selecting which kind of channel bandwidth will emerge during the channel selection. For another example, when severe interference comes between a first BSS and a neighboring BSS, the first BSS may need to reduce the interference between the neighboring BSS and itself by reselecting a channel bandwidth.

When the first BSS needs to select a channel bandwidth, the first AP firstly acquires a priority of a second BSS of which a coverage area overlaps with a coverage area of the first BSS and a channel bandwidth of the second BSS; then, compares the priority of the first BSS with the priority of the second BSS, and determines a channel bandwidth of the first BSS according to a comparison result. If the comparison result shows that the priority of the first BSS is lower than the priority of the second BSS, then the first AP may determine for the first BSS a channel bandwidth that is less than the channel bandwidth of the second BSS. For instance, assuming that the channel bandwidth of the second BSS is 80MHz, when the priority of the first BSS is lower than the priority of the second BSS, the first AP may determine the channel bandwidth of the first BSS as 40MHz or 20MHz or the like. If the comparison result shows that the priority of the first BSS is higher than or equal to the priority of the second BSS, the first AP may determine for the first BSS a channel bandwidth that is greater than or equal to the channel bandwidth of the second BSS. For instance, assuming that the channel bandwidth of the second BSS is 80MHz, when the priority of the first BSS is higher than or equal to the priority of the second BSS, the first AP may determine the channel bandwidth of the first BSS as 80MHz or 160MHz.

In this embodiment, when a first BSS needs to determine a channel bandwidth, compare a priority of the first BSS with a priority of a second BSS of which a coverage area overlaps with a coverage area of the first BSS. If the priority of the first BSS is higher than the priority of the second BSS, then determine a channel bandwidth that is greater than or equal to a channel bandwidth of the second BSS as the channel bandwidth of the first BSS, otherwise determine a channel bandwidth that is less than the channel bandwidth of the second BSS as the channel bandwidth of the first BSS. Since channel bandwidths of BSSs are determined based on priorities of the BSSs, a BSS with a high priority may be guaranteed preferential occupancy of a large bandwidth, and reasonable allocation of the channel bandwidths of the BSSs is achieved.

Furthermore, as shown in FIG. 1B, after step 102, may further include:
103, the first AP detects interference between the first BSS and the second BSS, and if the interference is greater than a preset threshold, the first AP performs at least one of the following steps till the interference is less than or equal to the threshold: reducing the channel bandwidth of the first BSS, instructing the second AP to reduce the channel bandwidth of the second BSS, selecting another channel which does not overlap with a channel used by the second BSS, and instructing the second AP to select another channel which does not overlap with a channel used by the first BSS.

After determining the channel bandwidth of the first BSS, the first AP will detect interference between the first BSS and the second BSS. If the interference between them is greater than a preset threshold, then the first AP reduces the channel bandwidth of the first BSS, instructs the second AP to reduce the channel bandwidth of the second BSS, selects another channel which does not overlap with a channel used by the second BSS, and/or instructs the second AP to select another channel which does not overlap with a channel used by the first BSS, till the interference between them is less than or equal to the threshold, thereby reducing the interference between the two BSSs.

In the embodiment of the present invention, the first AP detects interference between the first BSS and the second BSS, which is mainly to detect signal strength between the first BSS and the second BSS, and takes the signal strength between the two BSSs as the interference between the two BSSs, and if it is detected that the signal strength between them is greater than a preset threshold, then it is deemed that the interference between them is greater than the preset threshold; otherwise, it is deemed that the interference between them is less than the preset threshold.

A manner in which the first AP detects the signal strength between them includes: the first AP receives a signal sent by the second AP in the second BSS or an STA in the second BSS, and determines whether strength of the signal is greater than the preset threshold.

Specific situations are illustrated where the first AP performs steps of reducing the channel bandwidth of the first BSS, instructing the second AP to reduce the channel bandwidth of the second BSS, selecting another channel which does not overlap with a channel used by the second BSS and/or instructing the second AP to select another channel which does not overlap with a channel used by the first BSS, but they are not limited to the following examples.

For instance, if the channel used by the first BSS overlaps with the channel used by the second BSS, and the channel bandwidth of the first BSS is greater than the channel bandwidth of the second BSS, then the first AP may reduce the channel bandwidth of the first BSS till the interference between the first BSS and the second BSS is less than or equal to the preset threshold, thereby reducing an overlap between the channel bandwidth of the first BSS and the channel bandwidth of the second BSS, and thus reducing the interference between the two BSSs. Or, if the channel used by the first BSS overlaps with the channel used by the second BSS, and the channel bandwidth of the first BSS is greater than the channel bandwidth of the second BSS, then the first AP may also instruct the second AP to reduce the channel bandwidth of the second BSS till the interference between the first BSS and the second BSS is less than or equal to the preset threshold, thereby reducing an overlap between the channel bandwidth of the first BSS and the channel bandwidth of the second BSS, which may also reduce the interference between the two BSSs. For instance, assuming that the channel bandwidth of the first BSS is 160MHz, the channel bandwidth of the second BSS is 80MHz, then the first AP may reduce the channel bandwidth of the first BSS to 80MHz; or the first AP may instruct the second AP to reduce the channel bandwidth of the second BSS to 40MHz, thereby reducing an overlap between the channel bandwidth of the first BSS and the channel bandwidth of the second BSS, and thus reducing the interference between the two BSSs. To be noted herein, in a case where the channel bandwidth of the first BSS is greater than the channel bandwidth of the second BSS, an approach for reducing interference is not limited to the above described two approaches. Or, if the channel used by the first BSS overlaps with the channel used by the second BSS, and the channel bandwidth of the first BSS is greater than the channel bandwidth of the second BSS, then the first AP may also select another channel which does not overlap with the channel used by the second BSS, so that there is no interference between the first BSS and the second BSS. To be noted herein, a bandwidth of another channel which is reselected by the first AP and which does not overlap with the channel used by the second BSS may be the channel bandwidth determined before. Or, if the channel used by the first BSS overlaps with the channel used by the second BSS, and the channel bandwidth of the first BSS is greater than the channel bandwidth of the second BSS, then the first AP may also instruct the second AP to select another channel which does not overlap with the channel used by the first BSS, so that there is no interference between the first BSS and the second BSS. To be noted herein, a bandwidth of another channel which is reselected by the second AP and which does not overlap with the channel used by the first BSS may be the bandwidth of the channel used by the second BSS before.

If the channel used by the first BSS overlaps with the channel used by the second BSS, and the channel bandwidth of the first BSS is less than or equal to the channel bandwidth of the second BSS, then the first AP may instruct the second AP to reduce the channel bandwidth of the second BSS till the interference between the first BSS and the second BSS is less than or equal to the preset threshold, and thus the interference between the two BSSs is reduced by reducing an overlap between the channel bandwidth of the first BSS and the channel bandwidth of the second BSS. Or, if the channel used by the first BSS overlaps with the channel used by the second BSS, and the channel bandwidth of the first BSS is less than or equal to the channel bandwidth of the second BSS, then the first AP may also select another channel which does not overlap with the channel used by the second BSS, so that there is no interference between the first BSS and the second BSS. To be noted herein, a bandwidth of another channel which is reselected by the first AP and which does not overlap with the channel used by the second BSS may be the channel bandwidth determined before. Or, if the channel used by the first BSS overlaps with the channel used by the second BSS, and the channel bandwidth of the first BSS is less than or equal to the channel bandwidth of the second BSS, then the first AP may also instruct the second AP to select another channel which does not overlap with the channel used by the first BSS, so that there is no interference between the first BSS and the second BSS. To be noted herein, a bandwidth of another channel which is reselected by the second AP and which does not overlap with the channel used by the first BSS may be the bandwidth of the channel used by the second BSS before.

It can be seen from the above that, in a case where the channel used by the first BSS overlaps with the channel used by the second BSS, no matter how large the channel bandwidths of the two BSSs are, the first AP can overcome a problem of interference between the two BSSs by selecting another channel which does not overlap with the channel used by the second BSS, or instructing the second AP to select another channel which does not overlap with the channel used by the first BSS.

A situation where the channel bandwidth of the first BSS is equal to the channel bandwidth of the second BSS will be described herein: one case lies in that the first AP directly determines that the channel bandwidth of the first BSS is equal to the channel bandwidth of the second BSS; another case lies in that the reduced channel bandwidth of the first BSS is equal to the channel bandwidth of the second BSS; and still another case lies in that the reduced channel bandwidth of the second BSS is equal to the channel bandwidth of the first BSS.

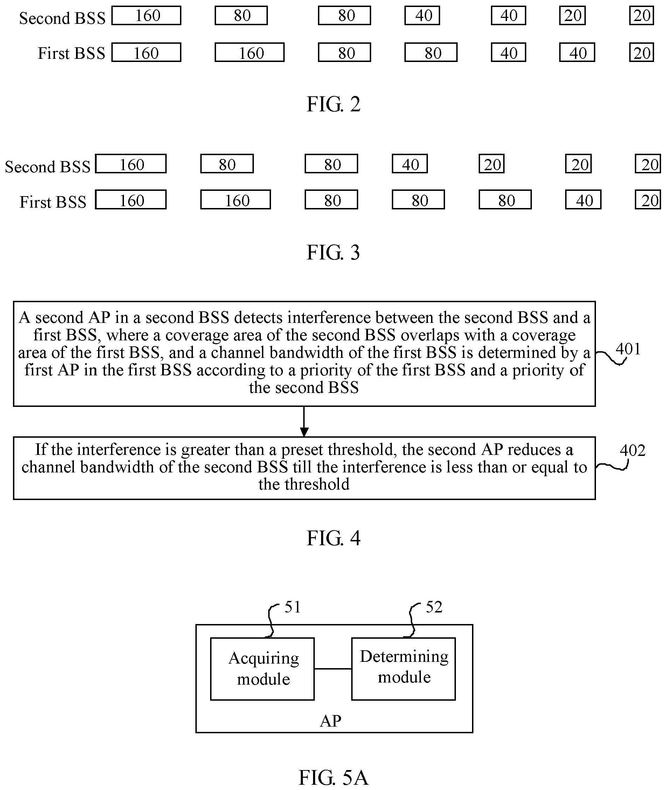

Assuming that the priority of the first BSS is higher than the priority of the second BSS, then the above solutions may be illustrated through a change situation about the channel bandwidth of the first BSS and the channel bandwidth of the second BSS as shown in FIG. 2. As shown in FIG. 2, an initial channel bandwidth of the second BSS is 160MHz, the first AP determines that the channel bandwidth of the first BSS is equal to the channel bandwidth of the second BSS after determining that the priority of the first BSS is higher than the priority of the second BSS, that is, 160MHz; then, the first AP detects interference between the first BSS and the second BSS to find that the interference between the two BSSs is greater than a preset threshold, and since the channel bandwidth of the first BSS is equal to the channel bandwidth of the second BSS, then the first AP instructs the second AP to reduce the channel bandwidth of the second BSS, and the reduced channel bandwidth of the second BSS at this time is 80MHz; assuming that the first AP continues to detect that the interference between the first BSS and the second BSS is greater than the preset threshold, since the channel bandwidth of the first BSS is greater than the channel bandwidth of the second BSS, then the first AP may reduce the interference by means of reducing the channel bandwidth of the first BSS, and the reduced channel bandwidth of the first BSS at this time is 80MHz; assuming that the first AP continues to detect that the interference between the first BSS and the second BSS is greater than the preset threshold, since the channel bandwidth of the first BSS is equal to the channel bandwidth of the second BSS, then the first AP instructs the second AP to reduce the channel bandwidth of the second BSS, the reduced channel bandwidth of the second BSS at this time is 40MHz; and so on, till both the channel bandwidth of the first BSS and the channel bandwidth of the second BSS are reduced to 20MHz.

Assuming that the priority of the first BSS is higher than the priority of the second BSS, then the above solutions may also be illustrated through a change situation about the channel bandwidth of the first BSS and the channel bandwidth of the second BSS as shown in FIG. 3. As shown in FIG. 3, an initial channel bandwidth of the second BSS is 160MHz, the first AP determines that the channel bandwidth of the first BSS is equal to the channel bandwidth of the second BSS after determining that the priority of the first BSS is higher than the priority of the second BSS, that is, 160MHz; then, the first AP detects interference between the first BSS and the second BSS to find that the interference between the two BSSs is greater than a preset threshold, and since the channel bandwidth of the first BSS is equal to the channel bandwidth of the second BSS, then the first AP instructs the second AP to reduce the channel bandwidth of the second BSS, and the reduced channel bandwidth of the second BSS at this time is 80MHz; assuming that the first AP continues to detect that the interference between the first BSS and the second BSS is greater than the preset threshold, since the channel bandwidth of the first BSS is greater than the channel bandwidth of the second BSS, then the first AP may reduce the interference by means of reducing the channel bandwidth of the first BSS, and the reduced channel bandwidth of the first BSS at this time is 80MHz; assuming that the first AP continues to detect that the interference between the first BSS and the second BSS is greater than the preset threshold, since the channel bandwidth of the first BSS is equal to the channel bandwidth of the second BSS, then the first AP instructs the second AP to reduce the channel bandwidth of the second BSS, and the reduced channel bandwidth of the second BSS at this time is 40MHz; assuming that the first AP continues to detect that the interference between the first BSS and the second BSS is greater than the preset threshold, since the channel bandwidth of the first BSS is greater than the channel bandwidth of the second BSS, then the first AP may reduce the interference by means of instructing the second AP to reduce the channel bandwidth of the second BSS, and the reduced channel bandwidth of the second BSS at this time is 20MHz; assuming that the first AP continues to detect that the interference between the first BSS and the second BSS is greater than the preset threshold, since the channel bandwidth of the first BSS is greater than the channel bandwidth of the second BSS, then the first AP reduces the interference by means of reducing the channel bandwidth of the first BSS, and the reduced channel bandwidth of the first BSS at this time is 40MHz; and so on, till both the channel bandwidth of the first BSS and the channel bandwidth of the second BSS are reduced to 20MHz.

It should be noted that, in an 802.11 standard, the number of 20MHz orthogonal channels amounts to 24, thus in a case where bandwidths of both the first BSS and the second BSS are both 20MHz or 40MHz+20MHz or 80MHz+20MHz, although the first BSS and the second BSS use a same channel bandwidth, they may locate on different channels, and since interference between different channels is low, it may be guaranteed to a great probability that there is basically no interference between each other. That is to say, the process for selecting a channel bandwidth as described above can always be convergent eventually. Of course, possibly in a case of combination of the other bandwidths, there is basically no interference between the first BSS and the second BSS, then it is unnecessary to continue reducing the bandwidths to 20MHz or 40MHz+20MHz or 80MHz+20MHz.

To be noted herein, FIG. 2 and FIG. 3 described above are merely specific examples, and a manner of continuously modifying channel bandwidths of two BSSs so as to reduce interference between the two BSSs is not limited to descriptions of FIG. 2 and FIG. 3.

In an optional implementation, a manner in which the first AP instructs the second AP to reduce the channel bandwidth of the second BSS includes: the first AP may send a channel bandwidth adjusting request message to the second AP to instruct the second AP to reduce the channel bandwidth of the second BSS.

For instance, in the 802.11 standard, the channel bandwidth adjusting request message sent by the first AP to the second AP may be carried by a management frame, that is, the channel bandwidth adjusting request message is sent to the second AP through the management frame. In other standards, the channel bandwidth adjusting request message may also be carried by a data frame, a control frame or a newly-added type of frame, and limitations are not made thereto.

Furthermore, optionally, the first AP may carry a size of a target adjusted bandwidth in the channel bandwidth adjusting request message, and thus the second AP may reduce the channel bandwidth of the second BSS to the target bandwidth.

Furthermore, optionally, after receiving the channel bandwidth adjusting request message sent by the first AP, the second AP may reply a channel bandwidth adjusting response message to the first AP. Correspondingly, after sending the channel bandwidth adjusting request message to the second AP, the first AP will also receive the channel bandwidth adjusting response message returned by the second AP.

The manner in which the first AP sends the channel bandwidth adjusting request message to the second AP may vary according to communication ranges of the first AP and the second AP. For instance, if the first AP and the second AP fall into the communication ranges of each other, then the first AP may send the channel bandwidth adjusting request message to the second AP directly to instruct the second AP to reduce the channel bandwidth of the second BSS. For instance, if the first AP and the second AP are located outside the communication ranges of each other, the first AP may send the channel bandwidth adjusting request message to the second AP via an AC or an STA which is located within both the coverage area of the first BSS and that of the second BSS to instruct the second AP to reduce the channel bandwidth of the second BSS. That is to say, when the first AP and the second AP are located outside the communication ranges of each other, the first AP may be relayed by an intermediate device which can communicate with both the first AP and the second AP simultaneously, such as the AC or the STA. The AC described herein is connected to the first AP and the second AP in a wired manner, respectively.

In an optional implementation, a manner in which the first AP instructs the second AP to select another channel which does not overlap with the channel used by the first BSS includes: the first AP may send a channel reselecting request message to the second AP to instruct the second AP to select another channel which does not overlap with the channel used by the first BSS.

For instance, in the 802.11 standard, the channel reselecting request message sent by the first AP to the second AP may be carried by a management frame, that is, the channel reselecting request message is sent to the second AP through the management frame. In other standards, the channel reselecting request message may also be carried by a data frame, a control frame or a newly-added type of frame, and limitations are not made thereto.

Furthermore, optionally, the first AP may carry an identification of a target channel in the channel reselecting request message, thus the second AP may select the target channel for the second BSS.

Furthermore, optionally, after receiving the channel reselecting request message sent by the first AP, the second AP may reply a channel reselecting response message to the first AP. Correspondingly, after sending the channel reselecting request message to the second AP, the first AP will also receive the channel reselecting response message returned by the second AP.

The manner in which the first AP sends the channel reselecting request message to the second AP may vary according to the communication ranges of the first AP and the second AP. For instance, if the first AP and the second AP are located in the communication ranges of each other, then the first AP may send the channel reselecting request message to the second AP directly to instruct the second AP to select another channel which does not overlap with the channel used by the first BSS. For instance, if the first AP and the second AP are located outside the communication ranges of each other, the first AP may send the channel reselecting request message to the second AP via an AC or an STA which is located within both the coverage area of the first BSS and that of the second BSS to instruct the second AP to select another channel which does not overlap with the channel used by the first BSS. That is to say, when the first AP and the second AP are located outside the communication ranges of each other, the first AP may be relayed by an intermediate device which can communicate with the first AP and the second AP simultaneously, such as the AC or the STA. The AC described herein is connected to the first AP and the second AP in a wired manner, respectively.

In this embodiment, a manner in which the first AP acquires the priority of the second BSS and the channel bandwidth of the second BSS may include but not limited to the following:
A first manner: the first AP receives a notification message sent by the second AP periodically, where the notification message includes the priority of the second BSS and the channel bandwidth of the second BSS.
A second manner: the first AP sends a first acquiring request message to the second AP to request to acquire the priority of the second BSS and the channel bandwidth of the second BSS, and receives a first acquiring response message returned by the second AP for the first acquiring request message, where the first acquiring response message includes the priority of the second BSS and the channel bandwidth of the second BSS.
   The first implementation and the second implementation described above are particularly applicable to a case where an AP in each BSS knows a priority and a channel bandwidth of the BSS to which it belongs.
A third manner: the first AP sends a second acquiring request message to the AC to request to acquire the priority of the second BSS and the channel bandwidth of the second BSS, and receives a second acquiring response message returned by the AC for the second acquiring request message, where the second acquiring response message includes the priority of the second BSS and the channel bandwidth of the second BSS. The AC herein is connected to the first AP in a wired manner at least, and is stored with information about the priority of the second BSS and the channel bandwidth of the second BSS.
   The third manner described above is particularly applicable to a scenario where the AC controls priorities and channel bandwidths of BSSs in a centralized way, but is not limited thereto.
A fourth manner: the first AP sends a third acquiring request message to the STA which is located within both the coverage area of the first BSS and that of the second BSS to request to acquire the priority of the second BSS and the channel bandwidth of the second BSS, and receives a third acquiring response message returned by the STA for the third acquiring request message, where the third acquiring response message includes the priority of the second BSS and the channel bandwidth of the second BSS.

The fourth manner described above is particularly applicable to a case where the first AP and the second AP are located outside the communication ranges of each other, but is not limited thereto. For a scenario where the first AP and the second AP are located in the communication ranges of each other, the fourth manner may also be employed.

It can be seen from the above that, according to a method for selecting a channel bandwidth provided in the embodiment, when a first BSS needs to select a channel bandwidth, a first AP in the first BSS acquires a priority and a channel bandwidth of a neighboring second BSS, and determines the channel bandwidth of the first BSS based on the priority and the channel bandwidth of the neighboring BSS, and thus a BSS with a high priority may be guaranteed preferential occupancy of a large bandwidth, and reasonable allocation of the channel bandwidths of the BSSs is achieved.

Furthermore, according to a method for selecting a channel bandwidth provided in this embodiment, after the channel bandwidth of the first BSS is determined, interference between the first BSS and the second BSS is detected, and when it is detected that the interference is greater than a preset threshold, reduce an overlap between the channel bandwidths of the two BSSs by reducing the channel bandwidth of the first BSS, instructing a second AP in the second BSS to reduce the channel bandwidth of the second BSS, selecting another channel which does not overlap with a channel used by the second BSS and/or instructing the second AP to select another channel which does not overlap with a channel used by the first BSS, so as to reduce an overlap between the channel bandwidths of the two BSS, thereby reducing the interference between the two BSSs, and thus a problem of severe interference between neighboring BSSs caused by the neighboring BSSs selecting relatively large channel bandwidths is solved, while the selection of the channel bandwidth of the first BSS is achieved.

FIG. 4 is a flow chart of still another method for selecting a channel bandwidth according to an embodiment of the present invention. As shown in FIG. 4, the method includes:
401, a second AP in a second BSS detects interference between the second BSS and a first BSS, where a coverage area of the second BSS overlaps with a coverage area of the first BSS, and a channel bandwidth of the first BSS is determined by a first AP in the first BSS according to a priority of the first BSS and a priority of the second BSS.
402, if the interference is greater than a preset threshold, the second AP reduces a channel bandwidth of the second BSS till the interference is less than or equal to the threshold.

In this embodiment, for convenience of description, a BSS which needs to select a channel bandwidth is referred to as a first BSS, an AP in the first BSS is referred to as a first AP, and a BSS of which a coverage area overlaps with a coverage area of the first BSS is referred to as a second BSS, and, likewise, an AP in the second BSS is referred to as a second AP. The coverage areas of the two BSSs overlap with each other, which may briefly be referred to as the two BSSs being neighboring. A scenario where a channel bandwidth needs to be selected is illustrated: for example, channel selection needs to be performed when a first BSS is established, and a problem of selecting which kind of channel bandwidth will emerge during the channel selection. For another example, when severe interference comes between a first BSS and a neighboring BSS, the first BSS may need to reduce the interference between the neighboring BSS and itself by reselecting a channel bandwidth.

When the first BSS needs to select a channel bandwidth, the first AP firstly acquires a priority of the second BSS of which a coverage area overlaps with a coverage area of the first BSS and the channel bandwidth of the second BSS; then, compares the priority of the first BSS with the priority of the second BSS, and determines a channel bandwidth of the first BSS according to a comparison result. If the comparison result shows that the priority of the first BSS is lower than the priority of the second BSS, then the first AP may determine for the first BSS a channel bandwidth that is less than the channel bandwidth of the second BSS. For instance, assuming that the channel bandwidth of the second BSS is 80MHz, when the priority of the first BSS is lower than the priority of the second BSS, the first AP may determine the channel bandwidth of the first BSS as 40MHz or 20MHz or the like. If the comparison result shows that the priority of the first BSS is higher than or equal to the priority of the second BSS, the first AP may determine for the first BSS a channel bandwidth that is greater than or equal to the channel bandwidth of the second BSS. For instance, assuming that the channel bandwidth of the second BSS is 80MHz, when the priority of the first BSS is higher than or equal to the priority of the second BSS, the first AP may determine the channel bandwidth of the first BSS as 80MHz or 160MHz.

In this embodiment, a second AP will also detect interference between a first BSS and a second BSS, if the interference therebetween is greater than a preset threshold, then the second AP will reduce a channel bandwidth of the second BSS till the interference therebetween is less than or equal to the threshold, thereby reducing the interference between the two BSSs.

In the embodiment of the present invention, the second AP detects interference between the first BSS and the second BSS, which is mainly to detect signal strength between first BSS and the second BSS, if it is detected that the signal strength between them is greater than a preset threshold, then it is deemed that the interference between them is greater than the preset threshold; otherwise, it is deemed that the interference between them is less than the preset threshold.

A manner in which the second AP detects the signal strength between them includes: the second AP receives a signal sent by the first AP in the first BSS or an STA in the first BSS, and determines whether strength of the signal is greater than the preset threshold.

A specific situation is illustrated where the second AP performs steps of reducing the channel bandwidth of the second BSS, but is not limited to the following illustrations.

For example, the second AP may initiatively reduce the channel bandwidth of the second BSS after detecting that the interference between the first BSS and the second BSS is greater than the preset threshold. For example, the first AP and the second AP may predetermine a related strategy for reducing a channel bandwidth, and the second AP initiatively reduces the channel bandwidth of the second BSS according to the strategy after detecting that the interference between the first BSS and the second BSS is greater than the preset threshold. The strategy may indicate a step length for reducing the channel bandwidth to the second AP, or may indicate a target bandwidth that needs to be reduced to the second AP, or may also indicate a time point of reducing the channel bandwidth of the second BSS to the second AP, etc.

For another example, the second AP may receive a channel bandwidth adjusting request message sent by the first AP, where the channel bandwidth adjusting request message is used to instruct the second AP to reduce the channel bandwidth of the second BSS; and then the second AP reduces the channel bandwidth of the second BSS according to the instruction of the channel bandwidth adjusting request message.

Furthermore, optionally, the channel bandwidth adjusting request message may include a size of a target adjusted bandwidth, then the second AP may reduce the channel bandwidth of the second BSS to the target bandwidth.

Furthermore, optionally, after receiving the channel bandwidth adjusting request message sent by the first AP, the second AP may send a channel bandwidth adjusting response message to the first AP to notify the first AP that the channel bandwidth adjusting request message has been received and bandwidth adjusting will be performed.

To be noted herein, corresponding to the manner in which the first AP sends the channel bandwidth adjusting request message to the second AP as described in the above embodiments, the second AP may receive the channel bandwidth adjusting request message in the same manner, which will not be repeated specifically.

In this embodiment, when a first BSS needs to select a channel bandwidth, a first AP in the first BSS acquires a priority and a channel bandwidth of a neighboring second BSS, and determines a channel bandwidth of the first BSS based on the priority and the channel bandwidth of the neighboring BSS, and after the channel bandwidth of the first BSS is determined, a second AP detects interference between the first BSS and the second BSS, and, when it is detected that the interference is greater than a preset threshold, reduces an overlap between the channel bandwidths of the two BSSs by reducing the channel bandwidth of the second BSS, thereby reducing the interference between the two BSSs, and thus, a problem of severe interference between neighboring BSSs caused by the neighboring BSSs selecting relatively large channel bandwidths is solved, and meanwhile the selection of the channel bandwidth of the first BSS is also achieved.

FIG. 5A is a schematic structural diagram of an AP according to an embodiment of the present invention. The AP locates in a first BSS, as shown in FIG. 5A, the AP includes: an acquiring module 51 and a determining module 52.

The acquiring module 51 is configured to acquire a priority of a second BSS and a channel bandwidth of the second BSS, where a coverage area of the second BSS overlaps with a coverage area of the first BSS.

The determining module 52 is connected to the acquiring module 51, and is configured to, when the priority of the first BSS is higher than or equal to the priority of the second BSS, determine a channel bandwidth that is greater than or equal to the channel bandwidth of the second BSS as a channel bandwidth of the first BSS, or when the priority of the first BSS is lower than the priority of the second BSS, determine a channel bandwidth that is less than the channel bandwidth of the second BSS as the channel bandwidth of the first BSS.

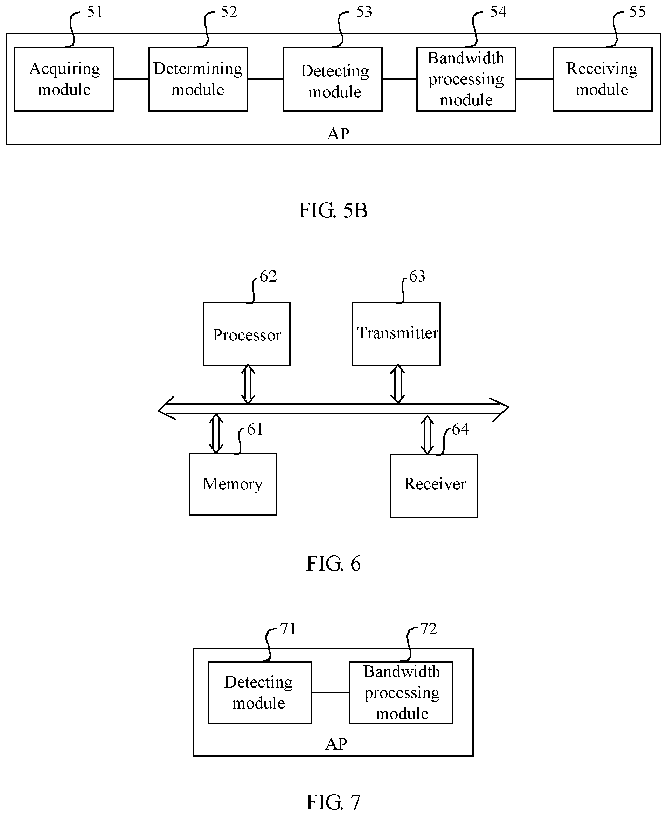

Furthermore, as shown in FIG. 5B, the AP may also include: a detecting module 53 and a bandwidth processing module54.

The detecting module 53 is configured to detect interference between the first BSS and the second BSS. The detecting module 53 may be connected to the determining module 52 and configured to, after the determining module 52 determines the channel bandwidth of the first BSS, detect interference between the first BSS and the second BSS.

The bandwidth processing module 54 is connected to the detecting module 53, and is configured to, when the interference is greater than a preset threshold, perform at least one of the following steps till the interference is less than or equal to the threshold:
reducing the channel bandwidth of the first BSS;
instructing an AP in the second BSS to reduce the channel bandwidth of the second BSS;
selecting another channel which does not overlap with a channel used by the second BSS; and
instructing the AP in the second BSS to select another channel which does not overlap with a channel used by the first BSS.

In an optional implementation, the bandwidth processing module 54 may be specifically configured to: if the channel used by the first BSS overlaps with the channel used by the second BSS, and the channel bandwidth of the first BSS is greater than the channel bandwidth of the second BSS, reduce the channel bandwidth of the first BSS till the interference between the first BSS and the second BSS is less than or equal to the preset threshold, or instruct the AP in the second BSS to reduce the channel bandwidth of the second BSS till the interference between the first BSS and the second BSS is less than or equal to the preset threshold, or select another channel which does not overlap with the channel used by the second BSS, or instruct the AP in the second BSS to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the AP in the second BSS to reduce the channel bandwidth of the second BSS till the interference between the first BSS and the second BSS is less than or equal to the preset threshold, or select another channel which does not overlap with the channel used by the second BSS, or instruct the AP in the second BSS to select another channel which does not overlap with the channel used by the first BSS.

Furthermore, optionally, the bandwidth processing module 54 being configured to instruct the AP in the second BSS to reduce the channel bandwidth of the second BSS, including: the bandwidth processing module 54, includes: the bandwidth processing module 54 may be specifically configured to send a channel bandwidth adjusting request message to the AP in the second BSS to instruct the AP in the second BSS to reduce the channel bandwidth of the second BSS. The bandwidth processing module 54 may specifically use but not limited to the following manners to send the channel bandwidth adjusting request message to the AP in the second BSS:
The bandwidth processing module 54 may be specifically configured to send the channel bandwidth adjusting request message to the AP in the second BSS directly to instruct the AP in the second BSS to reduce the channel bandwidth of the second BSS; or
The bandwidth processing module 54 may be specifically configured to send the channel bandwidth adjusting request message to the AP in the second BSS via an AC or an STA which is located within both the coverage area of the first BSS and that of the second BSS to instruct the AP in the second BSS to reduce the channel bandwidth of the second BSS. The AC is connected to the AP and the AP in the second BSS in a wired manner respectively.

Furthermore, as shown in FIG. 5B, the AP in this embodiment also includes a receiving module 55. The receiving module 55 is configured to, after the bandwidth processing module 54 sends the channel bandwidth adjusting request message, receive a channel bandwidth adjusting response message returned by the AP in the second BSS. Optionally, the receiving module 55 may be connected to the bandwidth processing module 54.

Furthermore, optionally, the bandwidth processing module 54 being configured to instruct the second AP to select another channel which does not overlap with the channel used by the first BSS, includes: the bandwidth processing module 54 is specifically configured to send a channel reselecting request message to the AP in the second BSS to instruct the AP in the second BSS to select another channel which does not overlap with the channel used by the first BSS.

The bandwidth processing module 54 may specifically use but not limited to the following manners to send the channel reselecting request message to the AP in the second BSS:
The bandwidth processing module 54 is specifically configured to send the channel reselecting request message to the AP in the second BSS directly to instruct the AP in the second BSS to select another channel which does not overlap with the channel used by the first BSS; or
The bandwidth processing module 54 is specifically configured to send the channel reselecting request message to the AP in the second BSS via the AC or the station STA which is located within both the coverage area of the first BSS and that of the second BSS to instruct the AP in the second BSS to select another channel which does not overlap with the channel used by the first BSS.

The receiving module 55 is further configured to, after the bandwidth processing module 54 sends the channel reselecting request message, receive a channel reselecting response message returned by the AP in the second BSS.

The acquiring module 51 in this embodiment may use but not limited to the following manners to acquire the priority of the second BSS and the channel bandwidth of the second BSS:
The acquiring module 51 may be specifically configured to receive a notification message sent by the AP in the second BSS periodically, where the notification message includes the priority of the second BSS and the channel bandwidth of the second BSS; or
The acquiring module 51 may be specifically configured to send a first acquiring request message to the AP in the second BSS to request to acquire the priority of the second BSS and the channel bandwidth of the second BSS, and receive a first acquiring response message returned by the AP in the second BSS for the first acquiring request message, where the first acquiring response message includes the priority of the second BSS and the channel bandwidth of the second BSS; or
The acquiring module 51 may be specifically configured to send a second acquiring request message to the AC to request to acquire the priority of the second BSS and the channel bandwidth of the second BSS, and receive a second acquiring response message returned by the AC for the second acquiring request message, where the second acquiring response message includes the priority of the second BSS and the channel bandwidth of the second BSS; or
The acquiring module 51 may be specifically configured to send a third acquiring request message to the STA which is located within both the coverage area of the first BSS and that of the second BSS to request to acquire the priority of the second BSS and the channel bandwidth of the second BSS, and receive a third acquiring response message returned by the STA for the third acquiring request message, where the third acquiring response message includes the priority of the second BSS and the channel bandwidth of the second BSS.

Functional modules of the AP provided in this embodiment may be used to perform the flow of the embodiment of a method for selecting a channel bandwidth as shown in FIG. 1A or FIG. 1B, specific working principles thereof will not be repeated, and reference may be made to descriptions of method embodiments for details.

According to an AP provided in this embodiment, when a first BSS needs to select a channel bandwidth, a priority and a channel bandwidth of a neighboring second BSS are acquired, and the channel bandwidth of the first BSS is determined based on the priority and the channel bandwidth of the neighboring BSS; since channel bandwidths of BSSs are determined based on priorities of the BSSs, a BSS with a high priority may be guaranteed preferential occupancy of a large bandwidth, and reasonable allocation of the channel bandwidths of the BSSs is implemented.

Furthermore, according to an AP provided in this embodiment, after determining the channel bandwidth of the first BSS, interference between the first BSS and the second BSS is detected, when it is detected that the interference is greater than a preset threshold, an overlap between the channel bandwidths of the two BSSs is reduced by reducing the channel bandwidth of the first BSS, instructing an AP in the second BSS to reduce the channel bandwidth of the second BSS, selecting another channel which does not overlap with a channel used by the second BSS and/or instructing the AP in the second BSS to select another channel which does not overlap with a channel used by the first BSS, thereby reducing the interference between the two BSSs, and thus a problem of severe interference between neighboring BSSs caused by the neighboring BSSs selecting relatively large channel bandwidths is solved, while the selection of the channel bandwidth of the first BSS is achieved.

FIG. 6 is a schematic structural diagram of still another AP according to an embodiment of the present invention. The AP locates in a first BSS. As shown in FIG. 6, the AP includes: a memory 61 and a processor 62.

The memory 61 is configured to store a program. Specifically, the program may include program codes, where the program codes include computer operating instructions.

The memory 61 may include a high-speed RAM memory, and may also include a non-volatile memory (non-volatile memory), such as at least one disk memory.

The processor 62 is configured to execute the program so as to: acquire a priority of a second BSS and a channel bandwidth of the second BSS; when the priority of the first BSS is higher than or equal to the priority of the second BSS, determine a channel bandwidth that is greater than or equal to the channel bandwidth of the second BSS as a channel bandwidth of the first BSS, or when the priority of the first BSS is lower than the priority of the second BSS, determine a channel bandwidth that is less than the channel bandwidth of the second BSS as the channel bandwidth of the first BSS.

The processor 62 may be a central processing unit (Central Processing Unit, CPU for short), or a specific integrated circuit (Application Specific Integrated Circuit, ASIC for short), or one or more integrated circuits configured to implement embodiments of the present invention.

In an operational implementation, the processor 62 may also be configured to, after determining the channel bandwidth of the first BSS, detect interference between the first BSS and the second BSS, and when the interference is greater than a preset threshold, perform at least one of the following steps till the interference is less than or equal to the threshold:
reducing the channel bandwidth of the first BSS;
instructing an AP in the second BSS to reduce the channel bandwidth of the second BSS;
selecting another channel which does not overlap with a channel used by the second BSS; and
instructing the AP in the second BSS to select another channel which does not overlap with a channel used by the first BSS.

In an optional implementation, the processor 62 being configured to perform one of the following steps till the interference is less than or equal to the threshold, includes: the processor 62 may be specifically configured to, if the channel used by the first BSS overlaps with the channel used by the second BSS, and the channel bandwidth of the first BSS is greater than the channel bandwidth of the second BSS, reduce the channel bandwidth of the first BSS till the interference between the first BSS and the second BSS is less than or equal to the preset threshold, or instruct the AP in the second BSS to reduce the channel bandwidth of the second BSS till the interference between the first BSS and the second BSS is less than or equal to the preset threshold, or select another channel which does not overlap with the channel used by the second BSS, or instruct the AP in the second BSS to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the AP in the second BSS to reduce the channel bandwidth of the second BSS till the interference between the first BSS and the second BSS is less than or equal to the preset threshold. The described steps include: reducing the channel bandwidth of the first BSS and instructing an AP in the second BSS to reduce the channel bandwidth of the second BSS; or selecting another channel which does not overlap with a channel used by the second BSS; or instructing the AP in the second BSS to select another channel which does not overlap with a channel used by the first BSS.

Furthermore, as shown in FIG. 6, the AP also includes: a transmitter 63.

For instance, the transmitter 63 may be configured to send a channel bandwidth adjusting request message to the AP in the second BSS to instruct the AP in the second BSS to reduce the channel bandwidth of the second BSS.

Based on the descriptions above, the processor 62 being configured to instruct the AP in the second BSS to reduce the channel bandwidth of the second BSS, includes: the processor 62 may be specifically configured to send a channel bandwidth adjusting request message to the AP in the second BSS via the transmitter 63 to instruct the AP in the second BSS to reduce the channel bandwidth of the second BSS.

The transmitter 63 may specifically use but not limited to the following manners to send the channel bandwidth adjusting request message to the AP in the second BSS:
The transmitter 63 may be specifically configured to send the channel bandwidth adjusting request message to the AP in the second BSS directly to instruct the AP in the second BSS to reduce the channel bandwidth of the second BSS; or
The transmitter 63 may be specifically configured to send the channel bandwidth adjusting request message to the AP in the second BSS via an AC or an STA which is located within both the coverage area of the first BSS and that of the second BSS to instruct the AP in the second BSS to reduce the channel bandwidth of the second BSS. The AC is connected to the AP and the AP in the second BSS in a wired manner respectively.

Furthermore, the AP in this embodiment also includes a receiver 64. The receiver 64 is configured to, after the transmitter 63 sends the channel bandwidth adjusting request message, receive a channel bandwidth adjusting response message returned by the AP in the second BSS.

Or, the transmitter 63 may be configured to send a channel reselecting request message to the AP in the second BSS to instruct the AP in the second BSS to select another channel which does not overlap with the channel used by the first BSS.

Based on the above descriptions, the processor 62 being configured to instruct the second AP to select another channel which does not overlap with the channel used by the first BSS, includes: the processor 62 may be specifically configured to send a channel reselecting request message to the AP in the second BSS via the transmitter 63 to instruct the AP in the second BSS to select another channel which does not overlap with the channel used by the first BSS.

The transmitter 63 may specifically use but not limited to the following manners to send the channel reselecting request message to the AP in the second BSS:
The transmitter 63 may be specifically configured to send the channel reselecting request message to the AP in the second BSS directly to instruct the AP in the second BSS to select another channel which does not overlap with the channel used by the first BSS; or
The transmitter 63 may be specifically configured to send the channel reselecting request message to the AP in the second BSS via an AC or an STA which is located within both the coverage area of the first BSS and that of the second BSS to instruct the AP in the second BSS to select another channel which does not overlap with the channel used by the first BSS. The AC is connected to the AP and the AP in the second BSS in a wired manner respectively.

Furthermore, the receiver 64 is further configured to, after the transmitter 63 sends the channel reselecting request message, receive a channel reselecting response message returned by the AP in the second BSS.

The processor 62 in this embodiment may use but not limited the following manners to acquire the priority of the second BSS and the channel bandwidth of the second BSS:
The processor 62 may be specifically configured to receive a notification message sent by the AP in the second BSS periodically via the receiver 64, where the notification message includes the priority of the second BSS and the channel bandwidth of the second BSS. Correspondingly, the receiver 64 may also be configured to receive a notification message sent by the AP in the second BSS periodically.

Or, the processor 62 may be specifically configured to send a first acquiring request message to the AP in the second BSS via the transmitter 63 to request to acquire the priority of the second BSS and the channel bandwidth of the second BSS, and receive, via the receiver 64, a first acquiring response message returned by the AP in the second BSS for the first acquiring request message, where the first acquiring response message includes the priority of the second BSS and the channel bandwidth of the second BSS. Correspondingly, the transmitter 63 may also be configured to send a first acquiring request message to the AP in the second BSS; the receiver 64 may also be configured to receive a first acquiring response message returned by the AP in the second BSS for the first acquiring request message.

Or, the processor 62 may be specifically configured to send a second acquiring request message to the AC via the transmitter 63 to request to acquire the priority of the second BSS and the channel bandwidth of the second BSS, and receive, via the receiver 64, a second acquiring response message returned by the AC for the second acquiring request message, where the second acquiring response message includes the priority of the second BSS and the channel bandwidth of the second BSS. Correspondingly, the transmitter 63 may also be configured to send a second acquiring request message to an AC; the receiver 64 may also be configured to receive a second acquiring response message returned by the AC for the second acquiring request message.

Or, the processor 62 may be specifically configured to send a third acquiring request message to the STA which is located within both the coverage area of the first BSS and that of the second BSS via the transmitter 63 to request to acquire the priority of the second BSS and the channel bandwidth of the second BSS, and receive, via the receiver 64, a third acquiring response message returned by the STA for the third acquiring request message, where the third acquiring response message includes the priority of the second BSS and the channel bandwidth of the second BSS. Correspondingly, the transmitter 63 may also be configured to send a third acquiring request message to the STA which is located within both the coverage area of the first BSS and that of the second BSS; the receiver 64 may also be configured to receive a third acquiring response message returned by the STA for the third acquiring request message.

Optionally, during a specific implementation, if the memory 61, the processor 62, the transmitter 63 and the receiver 64 are implemented independently, then the memory 61, the processor 62, the transmitter 63 and the receiver 64 may be connected to each other via a bus, and communications therebetween may be implemented. The bus may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus may be divided into an address bus, a data bus, a control bus, etc. For ease of representation, only a bold line is used for representation in FIG. 6, but it doesn't mean that there is only one bus or one type of bus.

Optionally, during a specific implementation, if the memory 61, the processor 62, the transmitter 63 and the receiver 64 are integrated on a chip, then the memory 61, the processor 62, the transmitter 63 and the receiver 64 may implement communications therebetween via an internal interface.

The AP in this embodiment may be used to perform the flow of the embodiment of a method for selecting a channel bandwidth as shown in FIG. 1A or FIG. 1B, specific working principles thereof will not be repeated, and reference may be made to descriptions of the method embodiment for details.

According to an AP provided in this embodiment, when a first BSS needs to select a channel bandwidth, a priority and a channel bandwidth of a neighboring second BSS are acquired, and the channel bandwidth of the first BSS is determined based on the priority and the channel bandwidth of the neighboring BSS. Since channel bandwidths of BSSs are determined based on priorities of the BSSs, a BSS with a high priority may be guaranteed preferential occupancy of a large bandwidth, and reasonable allocation of the channel bandwidths of the BSSs is implemented.

Furthermore, according to an AP provided in this embodiment, after determining a channel bandwidth of a first BSS, interference between the first BSS and the second BSS is detected, when it is detected that the interference is greater than a preset threshold, an overlap between channel bandwidths of the two BSSs is reduced by reducing the channel bandwidth of the first BSS, instructing an AP in the second BSS to reduce the channel bandwidth of the second BSS, selecting another channel which does not overlap with a channel used by the second BSS and/or instructing the AP in the second BSS to select another channel which does not overlap with a channel used by the first BSS, thereby reducing the interference between the two BSSs, and thus a problem of severe interference between neighboring BSSs caused by the neighboring BSSs selecting relatively large channel bandwidths is solved, while the selection of the channel bandwidth of the first BSS is achieved.

FIG. 7 is a schematic structural diagram of still another AP according to an embodiment of the present invention. The AP locates in a second BSS, and as shown in FIG. 7, the AP includes: a detecting module 71 and a bandwidth processing module 72.

The detecting module 71 is configured to detect interference between the second BSS and a first BSS, where a coverage area of the second BSS overlaps with a coverage area of the first BSS, and a channel bandwidth of the first BSS is determined by an AP in the first BSS according to a priority of the first BSS and a priority of the second BSS.

The bandwidth processing module 72 is connected to the detecting module 71, and is configured to, when the interference is greater than a preset threshold, reduce a channel bandwidth of the second BSS till the interference is less than or equal to the threshold.

In an optional implementation, the bandwidth processing module 72 may be specifically configured to receive a channel bandwidth adjusting request message sent by the AP in the first BSS, where the channel bandwidth adjusting request message is used to instruct the AP to reduce the channel bandwidth of the second BSS; and reduce the channel bandwidth of the second BSS according to an instruction of the channel bandwidth adjusting request message.

Furthermore, the AP in this embodiment may further include: a sending module. The sending module is configured to send a channel bandwidth adjusting response message to the AP in the first BSS after the bandwidth processing module 72 reduces the channel bandwidth of the second BSS.

Functional modules of the AP provided in this embodiment may be used to perform the flow of the embodiment of a method for selecting a channel bandwidth as shown in FIG. 4, specific working principles thereof will not be repeated, and reference may be made to descriptions of the method embodiment for details.

According to an AP provided in this embodiment, after an AP in a first BSS determines a channel bandwidth of the first BSS based on a priority and a channel bandwidth of a neighboring second BSS, interference between the first BSS and the second BSS is detected, when it is detected that the interference is greater than a preset threshold, an overlap between the channel bandwidths of the two BSSs is reduced by reducing the channel bandwidth of the second BSS, thereby reducing the interference between the two BSSs, and thus a problem of severe interference between neighboring BSSs caused by the neighboring BSSs selecting relatively large channel bandwidths is solved, and meanwhile the selection of the channel bandwidth of the first BSS is also achieved.

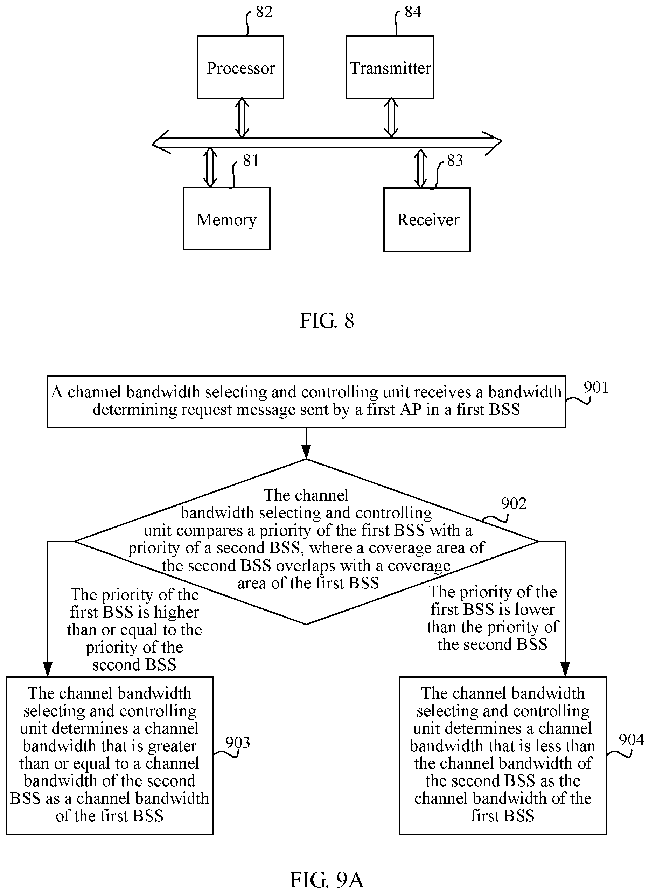

FIG. 8 is a schematic structural diagram of still another AP according to an embodiment of the present invention. The AP locates in a second BSS, and as shown in FIG. 8, the AP includes: a memory 81 and a processor 82.

The memory 81 is configured to store a program. Specifically, the program may include program codes, where the program codes include computer operating instructions.

The memory 81 may include a high-speed RAM memory, and may also include a non-volatile memory (non-volatile memory), such as at least one disk memory.

The processor 82 is configured to execute the program so as to: detect interference between the second BSS and a first BSS, when the interference is greater than a preset threshold, reduce a channel bandwidth of the second BSS till the interference is less than or equal to the threshold, where a coverage area of the second BSS overlaps with a coverage area of the first BSS, a channel bandwidth of first BSS is determined by an AP in the first BSS according to a priority of the first BSS and a priority of the second BSS.

The processor 82 may be a CPU, or a specific ASIC, or one or more integrated circuits configured to implement embodiments of the present invention.

In an operational implementation, as shown in FIG. 8, the AP also includes: a receiver 83.

The receiver 83 is configured to receive a channel bandwidth adjusting request message sent by the AP in the first BSS, where the channel bandwidth adjusting request message is used to instruct the AP to reduce the channel bandwidth of the second BSS.

Based on the above descriptions, the processor 82 may be specifically configured to receive, via the receiver 83, a channel bandwidth adjusting request message sent by the AP in the first BSS, and then reduce the channel bandwidth of the second BSS according to an instruction of the channel bandwidth adjusting request message.

Furthermore, as shown in FIG. 8, the AP in this embodiment may also include: a transmitter 84. The transmitter 84 is configured to, after the processor 82 reduces the channel bandwidth of the second BSS, send a channel bandwidth adjusting response message to the AP in the first BSS.

Optionally, during a specific implementation, if the memory 81, the processor 82, the receiver 83 and the transmitter 84 are implemented independently, then the memory 81, the processor 82, the receiver 83 and the transmitter 84 may be connected to each other via a bus, and communications therebetween may be implemented. The bus may be an ISA bus, a PCI bus, an EISA bus, or the like. The bus may be divided into an address bus, a data bus, a control bus, etc. For ease of representation, only a bold line is used for representation in FIG. 8, but it doesn't mean that there is only one bus or one type of bus.

Optionally, during a specific implementation, if the memory 81, the processor 82, the receiver 83 and the transmitter 84 are integrated on a chip, then the memory 81, the processor 82, the receiver 83 and the transmitter 84 may implement communications therebetween via an internal interface.

The AP in this embodiment may be used to perform the flow of the embodiment of a method for selecting a channel bandwidth as shown in FIG. 4, specific working principles thereof will not be repeated, and reference may be made to descriptions of the method embodiment for details.

According to an AP provided in this embodiment, after an AP in a first BSS determines a channel bandwidth of the first BSS based on a priority and a channel bandwidth of a neighboring second BSS, interference between the first BSS and the second BSS is detected, and when it is detected that the interference is greater than a preset threshold, an overlap between channel bandwidths of the two BSSs is reduced by reducing a channel bandwidth of the second BSS, thereby reducing the interference between the two BSSs, and thus a problem of severe interference between neighboring BSSs caused by the neighboring BSSs selecting relatively large channel bandwidths is solved, and meanwhile the selection of the channel bandwidth of the first BSS is also achieved.

FIG. 9A is a flow chart of still another method for selecting a channel bandwidth according to an embodiment of the present invention. As shown in FIG. 9A, the method includes:
901, a channel bandwidth selecting and controlling unit receives a bandwidth determining request message sent by a first AP in a first BSS.
902, the channel bandwidth selecting and controlling unit compares a priority of the first BSS with a priority of a second BSS, where a coverage area of the second BSS overlaps with a coverage area of the first BSS; if the priority of the first BSS is higher than or equal to the priority of the second BSS, then perform step 903; if the priority of the first BSS is lower than the priority of the second BSS, then perform step 904.
903, the channel bandwidth selecting and controlling unit determines a channel bandwidth that is greater than or equal to a channel bandwidth of the second BSS as a channel bandwidth of the first BSS.
904, the channel bandwidth selecting and controlling unit determines a channel bandwidth that is less than the channel bandwidth of the second BSS as the channel bandwidth of the first BSS.

In this embodiment, for convenience of description, a BSS which needs to select a channel bandwidth is referred to as a first BSS, an AP in the first BSS is referred to as a first AP, and a BSS of which a coverage area overlaps with a coverage area of the first BSS is referred to as a second BSS, and, likewise, an AP in the second BSS is referred to as a second AP. The coverage areas of the two BSSs overlap with each other, which may briefly be referred to as the two BSSs being neighboring. A scenario where a channel bandwidth needs to be selected is illustrated: for example, channel selection needs to be performed when a first BSS is established, and a problem of selecting which kind of channel bandwidth will emerge during the channel selection. For another example, when severe interference comes between a first BSS and a neighboring BSS, the first BSS may need to reduce the interference between the neighboring BSS and itself by reselecting a channel bandwidth.

A method for selecting a channel bandwidth provided in this embodiment is controlled by the channel bandwidth selecting and controlling unit in a centralized way. Specifically, when the first BSS needs to select a channel bandwidth, the first AP sends a bandwidth determining request message to the channel bandwidth selecting and controlling unit to request the channel bandwidth selecting and controlling unit to determine a channel bandwidth for the first BSS. The bandwidth determining request message carries an identification of the first BSS, which is used for the channel bandwidth selecting and controlling unit to identify the first BSS. The identification of the first BSS may be information such as MAC of the first BSS.

To be noted herein, the channel bandwidth selecting and controlling unit in this embodiment may be implemented by being set in an AC, or may be implemented as the AC, or may also be a dedicated control unit independent from the AC.

In an optional implementation, the channel bandwidth selecting and controlling unit pre-collects related information of BSSs, such as a priority of a first BSS, a list of other BSSs which overlap with a coverage area of the first BSS, priorities and channel bandwidths of other BSSs, information about interference between the BSSs, etc. Based on this, after determining the first BSS, the channel bandwidth selecting and controlling unit may acquire a second BSS, of which a coverage area overlaps with the coverage area of the first BSS, and thus may determine a priority of the second BSS and a channel bandwidth of the second BSS. Based on this, the channel bandwidth selecting and controlling unit may compare the priority of the first BSS with the priority of the second BSS directly, and thus determine a channel bandwidth for the first BSS according to a comparison result. If the comparison result shows that the priority of the first BSS is lower than the priority of the second BSS, then the channel bandwidth selecting and controlling unit may determine for the first BSS a channel bandwidth that is less than the channel bandwidth of the second BSS. For instance, assuming that the channel bandwidth of the second BSS is 80MHz, when the priority of the first BSS is lower than the priority of the second BSS, the channel bandwidth selecting and controlling unit may determine the channel bandwidth of the first BSS as 40MHz or 20MHz or the like. If the comparison result shows that the priority of the first BSS is higher than or equal to the priority of the second BSS, the channel bandwidth selecting and controlling unit may determine for the first BSS a channel bandwidth that is greater than or equal to the channel bandwidth of the second BSS. For instance, assuming that the channel bandwidth of the second BSS is 80MHz, when the priority of the first BSS is higher than or equal to the priority of the second BSS, the channel bandwidth selecting and controlling unit may determine the channel bandwidth of the first BSS as 80MHz or 160MHz.

To be noted herein, embodiments of the present invention will not limit a manner in which the channel bandwidth selecting and controlling unit collects related information of BSSs. For example, an AP in a BSS may report related information thereof to the channel bandwidth selecting and controlling unit periodically, or initiatively when the information changes. For another example, if priorities of the BSSs are allocated by the channel bandwidth selecting and controlling unit in a centralized way, then the channel bandwidth selecting and controlling unit may save the priorities of the BSSs locally after allocating the priorities of the BSSs, and in this way, information reported by an AP in a BSS may not carry a priority of the BSS.

In an optional implementation, the channel bandwidth selecting and controlling unit does not know information such as the priorities and the channel bandwidths of the BSSs in advance, then the channel bandwidth selecting and controlling unit needs to pre-acquire the priority of the first BSS and the priority of the second BSS before comparing the priority of the first BSS with the priority of the second BSS. For example, a first AP carries the priority of the first BSS in a bandwidth determining request message to send same to the channel bandwidth selecting and controlling unit, that is, the bandwidth determining request message also includes the priority of the first BSS; the channel bandwidth selecting and controlling unit acquires the priority of the first BSS from the bandwidth determining request message, but not limited to this manner. For another example, the channel bandwidth selecting and controlling unit may send a first acquiring request message to the first AP to request to acquire the priority of the first BSS, and receive a first acquiring response message returned by the first AP for the first acquiring request message, where the first acquiring response message includes the priority of the first BSS; or, the channel bandwidth selecting and controlling unit may receive a first notification message sent by the first AP periodically, where the first notification message includes the priority of the first BSS. A manner in which the channel bandwidth selecting and controlling unit acquires the priority of the second BSS includes but not limited to the following: the channel bandwidth selecting and controlling unit receives a second notification message sent by the second AP periodically, where the second notification message includes the priority of the second BSS; or the channel bandwidth selecting and controlling unit sends a second acquiring request message to the second AP to request to acquire the priority of the second BSS, and receives a second acquiring response message returned by the second AP for the second acquiring request message, where the second acquiring response message includes the priority of the second BSS.

The channel bandwidth selecting and controlling unit not only needs to acquire the priority of the second BSS, but also needs to acquire the channel bandwidth of the second BSS. In order to ease the burden of the channel bandwidth selecting and controlling unit, the channel bandwidth selecting and controlling unit may acquire the priority and the channel bandwidth of the second BSS during a same process simultaneously, then, besides including the priority of the second BSS, the above notification message may also include the channel bandwidth of the second BSS. Correspondingly, besides including the priority of the second BSS, the above acquiring response message may also include the channel bandwidth of the second BSS. Or, processes in which the channel bandwidth selecting and controlling unit acquires the priority of the second BSS and acquires the channel bandwidth of the second BSS may be different, then a manner in which the channel bandwidth selecting and controlling unit acquires the channel bandwidth of the second BSS includes but not limited to the following: the channel bandwidth selecting and controlling unit receives a channel bandwidth of the second BSS sent by the second AP periodically; or, the channel bandwidth selecting and controlling unit sends an acquiring request to the second AP to request to acquire the channel bandwidth of the second BSS, and receives the channel bandwidth of the second BSS returned by the second AP for the acquiring request.

In an optional implementation, the channel bandwidth selecting and controlling unit does not know that coverage areas of which BSSs overlap with the coverage area of the first BSS. Then, an optional implementation includes: the first AP determines a second BSS, of which a coverage area overlaps with the coverage area of the first BSS, and carries an identification of the second BSS in the bandwidth determining request message, which is used for the channel bandwidth selecting and controlling unit to determine the second BSS. That is to say, the bandwidth determining request message sent by the first AP to the channel bandwidth selecting and controlling unit includes the identification of the second BSS, which is used for the channel bandwidth selecting and controlling unit to determine the second BSS of which the coverage area overlaps with the first BSS.

In this embodiment, when a first BSS needs to determine a channel bandwidth, a channel bandwidth selecting and controlling unit compares a priority of the first BSS with a priority of a second BSS which overlaps with a coverage area of the first BSS, if the priority of the first BSS is higher than the priority of the second BSS, then determines a channel bandwidth that is greater than or equal to a channel bandwidth of the second BSS as the channel bandwidth of the first BSS, otherwise determines a channel bandwidth that is less than the channel bandwidth of the second BSS as the channel bandwidth of the first BSS. Since channel bandwidths of BSSs are determined based on priorities of the BSSs, a BSS with a high priority may be guaranteed preferential occupancy of a large bandwidth, and reasonable allocation of the channel bandwidths of the BSSs is achieved.

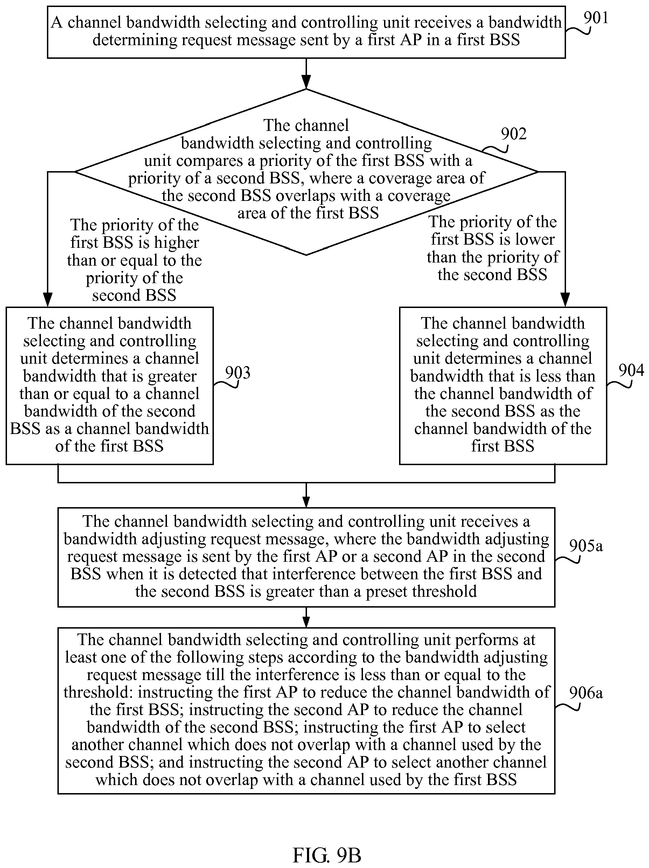

Furthermore, as shown in FIG. 9B, after step 903 or step 904, may further include:
905a, the channel bandwidth selecting and controlling unit receives a bandwidth adjusting request message, where the bandwidth adjusting request message is sent when the first AP or a second AP in the second BSS detects that interference between the first BSS and the second BSS is greater than a preset threshold.
906a, the channel bandwidth selecting and controlling unit performs at least one of the following steps according to the bandwidth adjusting request message till the interference is less than or equal to the threshold: instructing the first AP to reduce the channel bandwidth of the first BSS; instructing the second AP to reduce the channel bandwidth of the second BSS; instructing the first AP to select another channel which does not overlap with a channel used by the second BSS; and instructing the second AP to select another channel which does not overlap with a channel used by the first BSS.

After determining the channel bandwidth of the first BSS, the first AP or the second AP will detect interference between the first BSS and the second BSS; if the interference between them is greater than a preset threshold, then the first AP or the second AP will send a bandwidth adjusting request message to the channel bandwidth selecting and controlling unit to request the channel bandwidth selecting and controlling unit to adjust the channel bandwidth of the first BSS, the channel bandwidth of the second BSS, a channel used by the first BSS and/or a channel used by the second BSS, thereby reducing interference between two the first BSS and the second BSS.

After receiving the bandwidth adjusting request message sent by the first AP or the second AP, the channel bandwidth selecting and controlling unit may determine that the interference between the two BSSs is greater than a preset threshold, and thus reduce the interference between the two BSSs by instructing the first AP to reduce the channel bandwidth of the first BSS, instructing the second AP to reduce the channel bandwidth of the second BSS, instructing the first AP to select another channel which does not overlap with a channel used by the second BSS, and/or instructing the second AP to select another channel which does not overlap with a channel used by the first BSS, till the interference between them is less than or equal to the threshold.

In the embodiment of the present invention, the first AP or the second AP detects interference between the first BSS and the second BSS, which is mainly to detect signal strength between first BSS and the second BSS, and if it is detected that the signal strength between them is greater than a preset threshold, then it is deemed that the interference between them is greater than the preset threshold; otherwise, it is deemed that the interference between them is less than the preset threshold.

A manner in which the first AP detects the signal strength between the first BSS and the second BSS includes: the first AP receives a signal sent by the second AP or an STA in the second BSS, and determines whether strength of the signal is greater than the preset threshold. Correspondingly, a manner in which the second AP detects the signal strength between the first BSS and the second BSS includes: the second AP receives a signal sent by the first AP or an STA in the first BSS, and determines whether strength of the signal is greater than the preset threshold.

Specific situations are illustrated where the channel bandwidth selecting and controlling unit performs steps of instructing the first AP to reduce the channel bandwidth of the first BSS, instructing the second AP to reduce the channel bandwidth of the second BSS, instructing the first AP to select another channel which does not overlap with a channel used by the second BSS and/or instructing the second AP to select another channel which does not overlap with a channel used by the first BSS, but they are not limited to the following examples.

For instance, if the channel used by the first BSS overlaps with the channel used by the second BSS, and the channel bandwidth of the first BSS is greater than the channel bandwidth of the second BSS, then the channel bandwidth selecting and controlling unit may instruct the first AP to reduce the channel bandwidth of the first BSS till the interference between the first BSS and the second BSS is less than or equal to the preset threshold, thereby reducing an overlap between the channel bandwidth of the first BSS and the channel bandwidth of the second BSS, and thus reducing the interference between the two BSSs. Or, if the channel used by the first BSS overlaps with the channel used by the second BSS, and the channel bandwidth of the first BSS is greater than the channel bandwidth of the second BSS, then the channel bandwidth selecting and controlling unit may also instruct the second AP to reduce the channel bandwidth of the second BSS till the interference between the first BSS and the second BSS is less than or equal to the preset threshold, thereby reducing an overlap between the channel bandwidth of the first BSS and the channel bandwidth of the second BSS, which may also reduce the interference between the two BSSs. For instance, assuming that the channel bandwidth of the first BSS is 160MHz, the channel bandwidth of the second BSS is 80MHz, then the channel bandwidth selecting and controlling unit may instruct the first AP to reduce the channel bandwidth of the first BSS to 80MHz; or the channel bandwidth selecting and controlling unit may also instruct the second AP to reduce the channel bandwidth of the second BSS to 40MHz, thereby reducing an overlap between the channel bandwidth of the first BSS and the channel bandwidth of the second BSS, and thus reducing the interference between the two BSSs. To be noted herein, in a case where the channel bandwidth of the first BSS is greater than the channel bandwidth of the second BSS, an approach for reducing interference is not limited to the above described two approaches. Or, if the channel used by the first BSS overlaps with the channel used by the second BSS, and the channel bandwidth of the first BSS is greater than the channel bandwidth of the second BSS, then the channel bandwidth selecting and controlling unit may also instruct the first AP to select another channel which does not overlap with the channel used by the second BSS, so that there is no interference between the first BSS and the second BSS. To be noted herein, a bandwidth of another channel which is reselected by the first AP and which does not overlap with the channel used by the second BSS may be the channel bandwidth determined before. Or, if the channel used by the first BSS overlaps with the channel used by the second BSS, and the channel bandwidth of the first BSS is greater than the channel bandwidth of the second BSS, then the channel bandwidth selecting and controlling unit may also instruct the second AP to select another channel which does not overlap with the channel used by the first BSS, so that there is no interference between the first BSS and the second BSS. To be noted herein, a bandwidth of another channel which is reselected by the second AP and which does not overlap with the channel used by the first BSS may be the bandwidth of the channel used by the second BSS before.

If the channel used by the first BSS overlaps with the channel used by the second BSS, and the channel bandwidth of the first BSS is less than or equal to the channel bandwidth of the second BSS, then the channel bandwidth selecting and controlling unit may instruct the second AP to reduce the channel bandwidth of the second BSS till the interference between the first BSS and the second BSS is less than or equal to the preset threshold, and thus the interference between the two BSSs is reduced by reducing an overlap between the channel bandwidth of the first BSS and the channel bandwidth of the second BSS. Or, if the channel used by the first BSS overlaps with the channel used by the second BSS, and the channel bandwidth of the first BSS is greater than the channel bandwidth of the second BSS, then the channel bandwidth selecting and controlling unit may also instruct the first AP to select another channel which does not overlap with the channel used by the second BSS, so that there is no interference between the first BSS and the second BSS. To be noted herein, a bandwidth of another channel which is reselected by the first AP and which does not overlap with the channel used by the second BSS may be the channel bandwidth determined before. Or, if the channel used by the first BSS overlaps with the channel used by the second BSS, and the channel bandwidth of the first BSS is greater than the channel bandwidth of the second BSS, then the channel bandwidth selecting and controlling unit may also instruct the second AP to select another channel which does not overlap with the channel used by the first BSS, so that there is no interference between the first BSS and the second BSS. To be noted herein, a bandwidth of another channel which is reselected by the second AP and which does not overlap with the channel used by the first BSS may be the bandwidth of the channel used by the second BSS before.

It can be seen from the above descriptions that, in a case where the channel used by the first BSS overlaps with the channel used by the second BSS, no matter how large the channel bandwidths of the two BSSs are, the channel bandwidth selecting and controlling unit can overcome a problem that there is interference between the two BSSs by instructing the first AP to select another channel which does not overlap with the channel used by the second BSS, or instructing the second AP to select another channel which does not overlap with the channel used by the first BSS.

A situation where the channel bandwidth of the first BSS is equal to the channel bandwidth of the second BSS will be described herein: one case lies in that the channel bandwidth selecting and controlling unit directly determines that the channel bandwidth of the first BSS is equal to the channel bandwidth of the second BSS; another case lies in that the reduced channel bandwidth of the first BSS is equal to the channel bandwidth of the second BSS; and still another case lies in that the reduced channel bandwidth of the second BSS is equal to the channel bandwidth of the first BSS.

In an optional implementation, a manner in which the channel bandwidth selecting and controlling unit instructs the first AP to reduce the channel bandwidth of the first BSS includes: the channel bandwidth selecting and controlling unit sends a first channel bandwidth adjusting instruct message to the first AP to instruct the first AP to reduce the channel bandwidth of the first BSS. Furthermore, optionally, the channel bandwidth selecting and controlling unit may carry a size of a target adjusted bandwidth in the first channel bandwidth adjusting instruct message, so that the first AP may reduce the channel bandwidth of the first BSS to the target bandwidth. Furthermore, optionally, after receiving the first channel bandwidth adjusting instruct message sent by the channel bandwidth selecting and controlling unit., the first AP may reply a first channel bandwidth adjusting response message to the channel bandwidth selecting and controlling unit. Correspondingly, after sending the first channel bandwidth adjusting instruct message to the first AP to instruct the first AP to reduce the channel bandwidth of the first BSS, the channel bandwidth selecting and controlling unit may receive the first channel bandwidth adjusting response message returned by the first AP. Furthermore, after adjusting the channel bandwidth of the first BSS, the first AP may send information about the adjusted bandwidth and the interference between the first BSS and the second BSS to the channel bandwidth selecting and controlling unit.

In an optional implementation, a manner in which the channel bandwidth selecting and controlling unit instructs the second AP to reduce the channel bandwidth of the second BSS includes: the channel bandwidth selecting and controlling unit may send a second channel bandwidth adjusting instruct message to the second AP to instruct the second AP to reduce the channel bandwidth of the second BSS. Furthermore, optionally, the channel bandwidth selecting and controlling unit may carry a size of a target adjusted bandwidth in the second channel bandwidth adjusting instruct message, so that the second AP may reduce the channel bandwidth of the second BSS to the target bandwidth. Furthermore, optionally, after receiving the second channel bandwidth adjusting instruct message sent by the channel bandwidth selecting and controlling unit, the second AP may reply a second channel bandwidth adjusting response message to the channel bandwidth selecting and controlling unit. Correspondingly, after sending the second channel bandwidth adjusting instruct message to the second AP to instruct the second AP to reduce the channel bandwidth of the second BSS, the channel bandwidth selecting and controlling unit may receive the second channel bandwidth adjusting response message returned by the second AP. Furthermore, after adjusting the channel bandwidth of the second BSS, the second AP may send information about the adjusted bandwidth and the interference between the first BSS and the second BSS to the channel bandwidth selecting and controlling unit.

For instance, in the 802.11 standard, the first channel bandwidth adjusting instruct message or the second channel bandwidth adjusting instruct message sent by the channel bandwidth selecting and controlling unit to the first AP or to the second AP may be carried by a management frame, that is, the channel bandwidth adjusting instruct message is sent to the first AP or the second AP through the management frame. In other standards, the channel bandwidth adjusting instruct message may also be carried by a data frame, a control frame or a newly-added type of frame, and limitations are not made thereto.

In an optional implementation, a manner in which the channel bandwidth selecting and controlling unit instructs the first AP to reduce the channel bandwidth of the first BSS includes: the channel bandwidth selecting and controlling unit sends a first channel bandwidth adjusting instruct message to the first AP to instruct the first AP to reduce the channel bandwidth of the first BSS. Furthermore, optionally, the channel bandwidth selecting and controlling unit may carry a size of a target adjusted bandwidth in the first channel bandwidth adjusting instruct message, so that the first AP may reduce the channel bandwidth of the first BSS to the target bandwidth. Furthermore, optionally, after receiving the first channel bandwidth adjusting instruct message sent by the channel bandwidth selecting and controlling unit, the first AP may reply a first channel bandwidth adjusting response message to the channel bandwidth selecting and controlling unit. Correspondingly, after sending the first channel bandwidth adjusting instruct message to the first AP to instruct the first AP to reduce the channel bandwidth of the first BSS, the channel bandwidth selecting and controlling unit may receive the first channel bandwidth adjusting response message returned by the first AP. Furthermore, after adjusting the channel bandwidth of the first BSS, the first AP may send information about the adjusted bandwidth and the interference between the first BSS and the second BSS to the channel bandwidth selecting and controlling unit.

In an optional implementation, a manner in which the channel bandwidth selecting and controlling unit instructs the first AP to select another channel which does not overlap with the channel used by the second BSS includes: the channel bandwidth selecting and controlling unit sends a first channel reselecting instruct message to the first AP to instruct the first AP to reselect another channel which does not overlap with the channel used by the second BSS. Furthermore, optionally, the channel bandwidth selecting and controlling unit may carry an identification of a target channel in the first channel reselecting instruct message, so that the first AP may select the target channel for the first BSS. Furthermore, optionally, after receiving the first channel reselecting instruct message sent by the channel bandwidth selecting and controlling unit, the first AP may reply a first channel reselecting response message to the channel bandwidth selecting and controlling unit. Correspondingly, after sending the first channel reselecting instruct message to the first AP, the channel bandwidth selecting and controlling unit may receive the first channel reselecting response message returned by the first AP.

In an optional implementation, a manner in which the channel bandwidth selecting and controlling unit instructs the second AP to select another channel which does not overlap with the channel used by the first BSS includes: the channel bandwidth selecting and controlling unit sends a second channel reselecting instruct message to the second AP to instruct the second AP to reselect another channel which does not overlap with the channel used by the first BSS. Furthermore, optionally, the channel bandwidth selecting and controlling unit may carry an identification of a target channel in the second channel reselecting instruct message, so that the second AP may select the target channel for the second BSS. Furthermore, optionally, after receiving the second channel reselecting instruct message sent by the channel bandwidth selecting and controlling unit, the second AP may reply a second channel reselecting response message to the channel bandwidth selecting and controlling unit. Correspondingly, after sending the second channel reselecting instruct message to the second AP, the channel bandwidth selecting and controlling unit may receive the second channel reselecting response message returned by the second AP.

For instance, in the 802.11 standard, the first channel reselecting instruct message or the second channel reselecting instruct message sent by the channel bandwidth selecting and controlling unit to the first AP or to the second AP may be carried by a management frame, that is, the channel reselecting instruct message is sent to the first AP or the second AP through the management frame. In other standards, the channel reselecting instruct message may also be carried by a data frame, a control frame or a newly-added type of frame, and limitations are not made thereto.

It can be seen from the above descriptions that, according to a method for selecting a channel bandwidth in this embodiment, when a first BSS needs to select a channel bandwidth, a channel bandwidth selecting and controlling unit compares a priority of the first BSS with a priority of a second BSS, and determines a channel bandwidth of the first BSS based on the comparison result and a channel bandwidth of a neighboring BSS, and thus a BSS with a high priority may be guaranteed preferential occupancy of a large bandwidth, and reasonable allocation of the channel bandwidths of the BSSs is achieved.

Furthermore, according to a method for selecting a channel bandwidth in this embodiment, after the channel bandwidth of the first BSS is determined, if a bandwidth adjusting request message sent by a first AP or a second AP is received, an overlap between channel bandwidths of two BSSs is reduced by instructing the first AP to reduce the channel bandwidth of the first BSS, instructing the second AP in the second BSS to reduce the channel bandwidth of the second BSS, instructing the first AP to select another channel which does not overlap with a channel used by the second BSS and/or instructing the second AP to select another channel which does not overlap with a channel used by the first BSS, thereby reducing interference between the two BSSs, and thus a problem of severe interference between neighboring BSSs caused by the neighboring BSSs selecting relatively large channel bandwidths is solved, while the selection of the channel bandwidth of the first BSS is achieved.

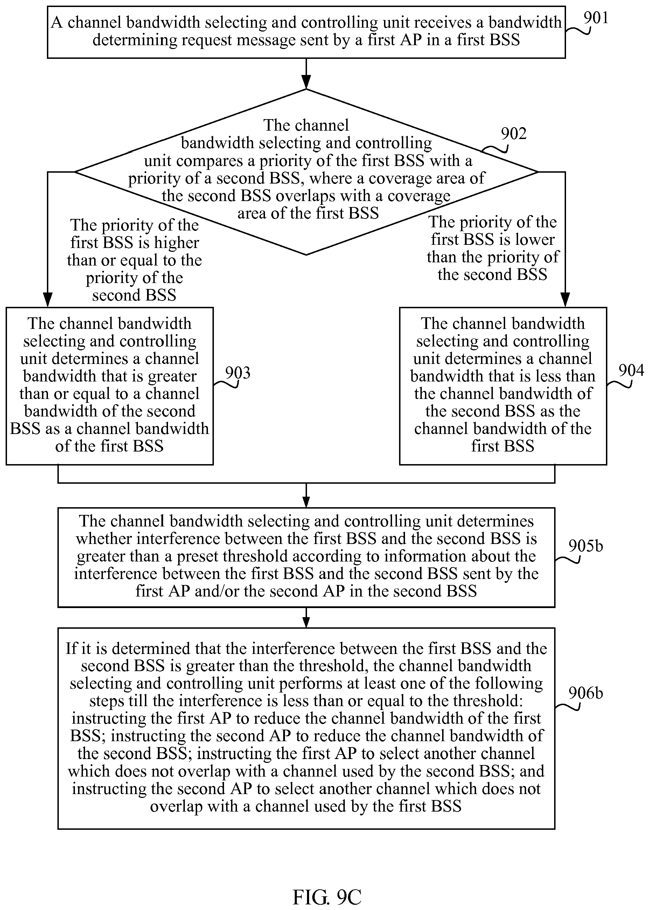

Furthermore, as shown in FIG. 9C, after step 903 or 904, may also include:
905b, the channel bandwidth selecting and controlling unit determines whether interference between the first BSS and the second BSS is greater than a preset threshold according to information about the interference between the first BSS and the second BSS sent by the first AP and/or the second AP in the second BSS.
906b, if it is determined that the interference between the first BSS and the second BSS is greater than the threshold, the channel bandwidth selecting and controlling unit performs at least one of the following steps till the interference is less than or equal to the threshold: instructing the first AP to reduce the channel bandwidth of the first BSS; instructing the second AP to reduce the channel bandwidth of the second BSS; instructing the first AP to select another channel which does not overlap with a channel used by the second BSS; and instructing the second AP to select another channel which does not overlap with a channel used by the first BSS.

In this embodiment, the first AP and/or the second AP will report information about interference between the first BSS and the second BSS to the channel bandwidth selecting and controlling unit, and the interference information may include quantity of the interference between the first BSS and the second BSS, or may include that whether the interference between them is greater than a preset threshold. Thus, the channel bandwidth selecting and controlling unit may determine whether the interference between the first BSS and the second BSS is greater than the preset threshold based on the interference information. If it is determined that the interference between the first BSS and the second BSS is greater than the threshold, then reduce the interference between the two BSSs by instructing the first AP to reduce the channel bandwidth of the first BSS, and/or instructing the second AP to reduce the channel bandwidth of the second BSS till the interference between them is less than or equal to the threshold.

To be noted herein, this embodiment will not limit a manner in which the fist AP and/or the second AP will report information about the interference between the first BSS and the second BSS to the channel bandwidth selecting and controlling unit. For example, the first AP and/or the second AP may report detected information about the interference between the first BSS and the second BSS to the channel bandwidth selecting and controlling unit periodically, or initiatively when the information changes.

Reference may be made to step 906a as described above for descriptions about step 906b, which will not be repeated herein.

It can be seen from the above descriptions that, according to a method for selecting a channel bandwidth in this embodiment, when a first BSS needs to select a channel bandwidth, a channel bandwidth selecting and controlling unit compares a priority of the first BSS with a priority of a second BSS, and determines a channel bandwidth of the first BSS based on the comparison result and a channel bandwidth of a neighboring BSS, and thus a BSS with a high priority may be guaranteed preferential occupancy of a large bandwidth, and reasonable allocation of the channel bandwidths of the BSSs is achieved.

Furthermore, according to a method for selecting a channel bandwidth in this embodiment, after the channel bandwidth of the first BSS is determined, the channel bandwidth selecting and controlling unit determines whether interference between the two BSSs is greater than a preset threshed according to information about the interference between the first BSS and the second BSS sent by the first AP and/or the second AP, if it is determined that the interference between the two BSSs is greater than the preset threshold, an overlap between channel bandwidths of the two BSSs is reduced by instructing the first AP to reduce the channel bandwidth of the first BSS, instructing the second AP in the second BSS to reduce the channel bandwidth of the second BSS, instructing the first AP to select another channel which does not overlap with a channel used by the second BSS and/or instructing the second AP to select another channel which does not overlap with a channel used by the first BSS, thereby reducing the interference between the two BSSs, and thus a problem of severe interference between neighboring BSSs caused by the neighboring BSSs selecting relatively large channel bandwidths is solved, while the selection of the channel bandwidth of the first BSS is achieved.

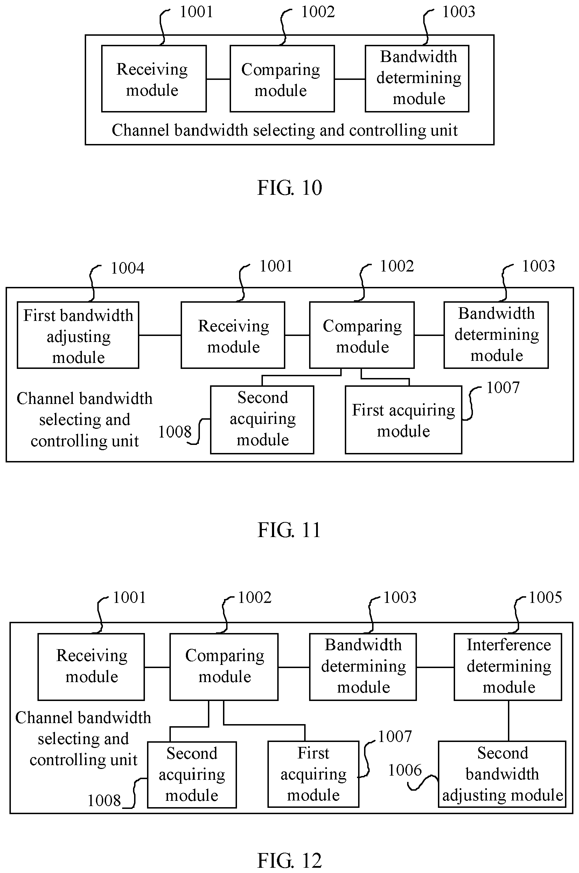

FIG. 10 is a schematic structural diagram of a channel bandwidth selecting and controlling unit according to an embodiment of the present invention. As shown in FIG. 10, the channel bandwidth selecting and controlling unit includes: a receiving module 1001, a comparing module 1002 and a bandwidth determining module 1003.

The receiving module 1001 is configured to receive a bandwidth determining request message sent by a first AP in a first BSS.

The comparing module 1002 is connected to the receiving module 1001, and is configured to compare a priority of the first BSS with a priority of a second BSS after the receiving module 1001 receives the bandwidth determining request message, where a coverage area of the second BSS overlaps with a coverage area of the first BSS.

The bandwidth determining module 1003 is connected to the comparing module 1002, and is configured to: when a comparison result of the comparing module 1002 shows that the priority of the first BSS is higher than or equal to the priority of the second BSS, determine a channel bandwidth that is greater than or equal to a channel bandwidth of the second BSS as a channel bandwidth of the first BSS, or when a comparison result of the comparing module 1002 shows that the priority of the first BSS is lower than the priority of the second BSS, determine a channel bandwidth that is less than the channel bandwidth of the second BSS as the channel bandwidth of the first BSS.

In an optional implementation, the receiving module 1001 is further configured to: after the bandwidth determining module 1003 determines the channel bandwidth of the first BSS, receive a bandwidth adjusting request message, where the bandwidth adjusting request message is sent by the first AP or a second AP in the second BSS when it is detected that interference between the first BSS and the second BSS is greater than a preset threshold.

Based on this, as shown in FIG. 11, the channel bandwidth selecting and controlling unit also includes: a first bandwidth adjusting module 1004, connected to the receiving module 1001 and configured to perform at least one of the following steps according to the bandwidth adjusting request message received by the receiving module 1001 till the interference is less than or equal to the threshold:
instructing the first AP to reduce the channel bandwidth of the first BSS;
instructing the second AP to reduce the channel bandwidth of the second BSS;
instructing the first AP to select another channel which does not overlap with a channel used by the second BSS; and
instructing the second AP to select another channel which does not overlap with a channel used by the first BSS.

The first bandwidth adjusting module 1004 is specifically configured to: if the channel used by the first BSS overlaps with the channel used by the second BSS, and the channel bandwidth of the first BSS is greater than the channel bandwidth of the second BSS, instruct the first AP to reduce the channel bandwidth of the first BSS till the interference is less than or equal to the threshold, or instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS.

Optionally, the first bandwidth adjusting module 1004 being configured to instruct the first AP to reduce the channel bandwidth of the first BSS, includes: the first bandwidth adjusting module 1004 is specifically configured to send a first channel bandwidth adjusting instruct message to the first AP to instruct the first AP to reduce the channel bandwidth of the first BSS. Correspondingly, the first bandwidth adjusting module 1004 being configured to instruct the second AP to reduce the channel bandwidth of the second BSS, includes: the first bandwidth adjusting module 1004 is specifically configured to send a second channel bandwidth adjusting instruct message to the second AP to instruct the second AP to reduce the channel bandwidth of the second BSS. Correspondingly, the first bandwidth adjusting module 1004 being configured to instruct the first AP to select another channel which does not overlap with the channel used by the second BSS, includes: the first bandwidth adjusting module 1004 is specifically configured to send a first channel reselecting instruct message to the first AP to instruct the first AP to reselect another channel which does not overlap with the channel used by the second BSS. Correspondingly, the first bandwidth adjusting module 1004 being configured to instruct the second AP to select another channel which does not overlap with the channel used by the first BSS, includes: the first bandwidth adjusting module 1004 is specifically configured to send a second channel reselecting instruct message to the second AP to instruct the second AP to reselect another channel which does not overlap with the channel used by the first BSS.

Furthermore, optionally, the receiving module 1001 is further configured to: after the first bandwidth adjusting module 1004 sends the first channel bandwidth adjusting instruct message to the first AP, receive a first channel bandwidth adjusting response message returned by the first AP, or after the first bandwidth adjusting module 1004 sends the second channel bandwidth adjusting instruct message to the second AP, receive a second channel bandwidth adjusting response message returned by the second AP, or after the first bandwidth adjusting module 1004 sends the first channel reselecting instruct message to the first AP, receive a first channel reselecting response message returned by the first AP; or after the first bandwidth adjusting module 1004 sends the second channel reselecting instruct message to the second AP, receive a second channel reselecting response message returned by the second AP.

In another optional implementation, as shown in FIG. 12, the channel bandwidth selecting and controlling unit also includes: an interference determining module 1005 and a second bandwidth adjusting module 1006.

The interference determining module 1005 is configured to determine whether interference between the first BSS and the second BSS is greater than a preset threshold according to information about the interference between the first BSS and the second BSS sent by the first AP and/or a second AP in the second BSS. Optionally, the interference determining module 1005 is connected to the bandwidth determining module 1003, and is configured to: after the bandwidth determining module 1003 determines the channel bandwidth of the first BSS, determine whether interference between the first BSS and the second BSS is greater than a preset threshold according to information about the interference between the first BSS and the second BSS sent by the first AP and/or a second AP in the second BSS.

The second bandwidth adjusting module 1006 is connected to the interference determining module 1005, and is configured to: when the interference determining module 1005 determines that the interference between the first BSS and the second BSS is greater than the threshold, perform at least one of the following steps till the interference is less than or equal to the threshold:
instructing the first AP to reduce the channel bandwidth of the first BSS;
instructing the second AP to reduce the channel bandwidth of the second BSS;
instructing the first AP to select another channel which does not overlap with a channel used by the second BSS; and
instructing the second AP to select another channel which does not overlap with a channel used by the first BSS.

Optionally, the second bandwidth adjusting module 1006 is specifically configured to: if the channel used by the first BSS overlaps with the channel used by the second BSS, and the channel bandwidth of the first BSS is greater than the channel bandwidth of the second BSS, instruct the first AP to reduce the channel bandwidth of the first BSS till the interference is less than or equal to the threshold, or instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS.

Optionally, the second bandwidth adjusting module 1006 being configured to instruct the first AP to reduce the channel bandwidth of the first BSS, includes: the second bandwidth adjusting module 1006 is specifically configured to send a first channel bandwidth adjusting instruct message to the first AP to instruct the first AP to reduce the channel bandwidth of the first BSS. Correspondingly, the second bandwidth adjusting module 1006 being configured to instruct the second AP to reduce the channel bandwidth of the second BSS, includes: the second bandwidth adjusting module 1006 is specifically configured to send a second channel bandwidth adjusting instruct message to the second AP to instruct the second AP to reduce the channel bandwidth of the second BSS. Correspondingly, the second bandwidth adjusting module 1006 being configured to instruct the first AP to select another channel which does not overlap with the channel used by the second BSS, includes: the second bandwidth adjusting module 1006 is specifically configured to send a first channel reselecting instruct message to the first AP to instruct the first AP to reselect another channel which does not overlap with the channel used by the second BSS. Correspondingly, the second bandwidth adjusting module 1006 being configured to instruct the second AP to select another channel which does not overlap with the channel used by the first BSS, includes: the second bandwidth adjusting module 1006 is specifically configured to send a second channel reselecting instruct message to the second AP to instruct the second AP to reselect another channel which does not overlap with the channel used by the first BSS.

Furthermore, optionally, the receiving module 1001 is further configured to: after the second bandwidth adjusting module 1006 sends the first channel bandwidth adjusting instruct message to the first AP, receive a first channel bandwidth adjusting response message returned by the first AP; or after the second bandwidth adjusting module 1006 sends the second channel bandwidth adjusting instruct message to the second AP, receive a second channel bandwidth adjusting response message returned by the second AP; or after the second bandwidth adjusting module 1006 sends the first channel reselecting instruct message to the first AP, receive a first channel reselecting response message returned by the first AP; or after the second bandwidth adjusting module 1006 sends the second channel reselecting instruct message to the second AP, receive a second channel reselecting response message returned by the second AP.

In an optional implementation, the bandwidth determining request message includes the priority of the first BSS.

In an optional implementation, as shown in FIG. 11 or FIG. 12, the channel bandwidth selecting and controlling unit also includes: a first acquiring module 1007.

The first acquiring module 1007 is connected to the comparing module 1002, which is configured to: before the comparing module 1002 compares the priority of the first BSS with the priority of the second BSS, acquire the priority of the first BSS.

Optionally, the first acquiring module 1007 is specifically configured to receive a first notification message sent by the first AP periodically, where the first notification message includes the priority of the first BSS. Or, the first acquiring module 1007 is specifically configured to send a first acquiring request message to the first AP to request to acquire the priority of the first BSS, and receive a first acquiring response message returned by the first AP for the first acquiring request message, where the first acquiring response message includes the priority of the first BSS.

In an optional implementation, as shown in FIG. 11 or FIG. 12, the channel bandwidth selecting and controlling unit also includes: a second acquiring module 1008.

Optionally, the second acquiring module 1008 is specifically configured to: receive a second notification message sent by the second AP periodically, where the second notification message includes the priority of the second BSS; or the second acquiring module 1008 is specifically configured to send a second acquiring request message to the second AP to request to acquire the priority of the second BSS, and receive a second acquiring response message returned by the second AP for the second acquiring request message, where the second acquiring response message includes the priority of the second BSS.

Furthermore, optionally, the second notification message also includes the channel bandwidth of the second BSS; or the second acquiring response message also includes the channel bandwidth of the second BSS.

Furthermore, optionally, the bandwidth determining request message sent by the first AP to the channel bandwidth selecting and controlling unit also includes an identification of the second BSS, providing for the channel bandwidth selecting and controlling unit to determine the second BSS.

The channel bandwidth selecting and controlling unit in this embodiment may be implemented by being set in an AC, or may be implemented as the AC, or may also be a dedicated control unit independent from the AC.

Functional modules of the channel bandwidth selecting and controlling unit provided in this embodiment may be used to perform a flow of a method embodiment as shown in FIG. 9A or FIG. 9B or FIG. 9C, specific working principles thereof will not be repeated, and reference may be made to descriptions of the method embodiment for details.

According to a channel bandwidth selecting and controlling unit provided in this embodiment, when a first BSS needs to select a channel bandwidth, a priority of the first BSS is compared with a priority of a second BSS, and a channel bandwidth of the first BSS is determined based on the comparison result and a channel bandwidth of a neighboring BSS, and thus a BSS with a high priority may be guaranteed preferential occupancy of a large bandwidth, and reasonable allocation of channel bandwidths of BSSs is achieved.

Furthermore, after determining the channel bandwidth of the first BSS, or learns that interference between the two BSSs is greater than a preset threshold according to the bandwidth adjusting request message sent by the first AP or the second AP, or determines that interference between the two BSSs is greater than a preset threshold according to information about the interference between the first BSS and the second BSS sent by the first AP and/or the second AP, the channel bandwidth selecting and controlling unit provided in this embodiment reduces an overlap between the channel bandwidths of the two BSSs by instructing the first AP to reduce the channel bandwidth of the first BSS, instructing the second AP in the second BSS to reduce the channel bandwidth of the second BSS, instructing the first AP to select another channel which does not overlap with a channel used by the second BSS and/or instructing the second AP to select another channel which does not overlap with a channel used by the first BSS, thereby reducing the interference between the two BSSs, and thus a problem of severe interference between neighboring BSSs caused by the neighboring BSSs selecting relatively large channel bandwidths is solved while the selection of the channel bandwidth of the first BSS is achieved.

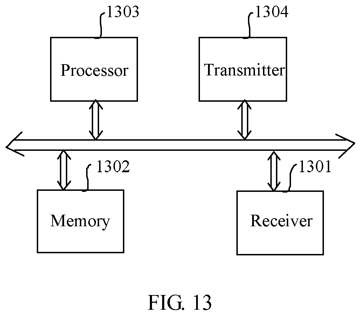

FIG. 13 is a schematic structural diagram of still another channel bandwidth selecting and controlling unit according to an embodiment of the present invention. As shown in FIG. 13, the channel bandwidth selecting and controlling unit includes: a receiver 1301, a memory 1302 and a processor 1303.

The receiver 1301 is configured to receive a bandwidth determining request message sent by a first AP in a first BSS.

The memory 1302 is configured to store a program. Specifically, the program may include program codes, where the program codes include computer operating instructions.

The memory 1302 may include a high-speed RAM memory, and may also include a non-volatile memory (non-volatile memory), such as at least one disk memory.

The processor 1303 is configured to execute the program so as to: compare a priority of the first BSS with a priority of a second BSS, where a coverage area of the second BSS overlaps with a coverage area of the first BSS; if the priority of the first BSS is higher than or equal to the priority of the second BSS, determine a channel bandwidth that is greater than or equal to a channel bandwidth of the second BSS as a channel bandwidth of the first BSS, or if the priority of the first BSS is lower than the priority of the second BSS, determine a channel bandwidth that is less than the channel bandwidth of the second BSS as the channel bandwidth of the first BSS.

The processor 1303 may be a CPU, or a specific ASIC, or one or more integrated circuits configured to implement embodiments of the present invention.

In an optional implementation, the receiver 1301 is further configured to: after the processor 1303 determines the channel bandwidth of the first BSS, receive a bandwidth adjusting request message, where the bandwidth adjusting request message is sent by the first AP or a second AP in the second BSS when it is detected that interference between the first BSS and the second BSS is greater than a preset threshold.

The processor 1303 is further configured to perform at least one of the following steps according to the bandwidth adjusting request message received by the receiver 1301 till the interference is less than or equal to the threshold:
instructing the first AP to reduce the channel bandwidth of the first BSS;
instructing the second AP to reduce the channel bandwidth of the second BSS;
instructing the first AP to select another channel which does not overlap with a channel used by the second BSS; and
instructing the second AP to select another channel which does not overlap with a channel used by the first BSS.

In another optional implementation, the processor 1303 is further configured to determine whether interference between the first BSS and the second BSS is greater than a preset threshold according to information about the interference between the first BSS and the second BSS sent by the first AP and/or a second AP in the second BSS, and when it is determined that the interference between the first BSS and the second BSS is greater than the threshold, perform at least one of the following steps till the interference is less than or equal to the threshold:
instructing the first AP to reduce the channel bandwidth of the first BSS;
instructing the second AP to reduce the channel bandwidth of the second BSS;
instructing the first AP to select another channel which does not overlap with a channel used by the second BSS; and
instructing the second AP to select another channel which does not overlap with a channel used by the first BSS.

Based on the above implementations, the processor 1303 is specifically configured to: if the channel used by the first BSS overlaps with the channel used by the second BSS, and the channel bandwidth of the first BSS is greater than the channel bandwidth of the second BSS, instruct the first AP to reduce the channel bandwidth of the first BSS till the interference is less than or equal to the threshold, or instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS; if the channel used by the first BSS overlaps with the channel used by the second BSS, and the channel bandwidth of the first BSS is less than or equal to the channel bandwidth of the second BSS, instruct the second AP to reduce the channel bandwidth of the second BSS till the interference is less than or equal to the threshold, or instruct the first AP to select another channel which does not overlap with the channel used by the second BSS, or instruct the second AP to select another channel which does not overlap with the channel used by the first BSS.

In an optionally implementation, as shown in FIG. 13, the channel bandwidth selecting and controlling unit also includes: a transmitter 1304.

Optionally, the processor 1303 being configured to instruct the first AP to reduce the channel bandwidth of the first BSS, includes: the processor 1303 is specifically configured to send a first channel bandwidth adjusting instruct message to the first AP via the transmitter 1304 to instruct the first AP to reduce the channel bandwidth of the first BSS. Correspondingly, the transmitter 1304 is configured to send the first channel bandwidth adjusting instruct message to the first AP.

Likewise, the processor 1303 being configured to instruct the second AP to reduce the channel bandwidth of the second BSS, includes: the processor 1303 is specifically configured to send a second channel bandwidth adjusting instruct message to the second AP via the transmitter 1304 to instruct the second AP to reduce the channel bandwidth of the second BSS. Correspondingly, the transmitter 1304 is configured to send the second channel bandwidth adjusting instruct message to the second AP.

Likewise, the processor 1303 being configured to instruct the first AP to select another channel which does not overlap with the channel used by the second BSS, includes: the processor 1303 is specifically configured to send a first channel reselecting instruct message to the first AP via the transmitter 1304 to instruct the first AP to reselect another channel which does not overlap with the channel used by the second BSS. Correspondingly, the transmitter 1304 is configured to send the first channel reselecting instruct message to the first AP.

Likewise, the processor 1303 being configured to instruct the second AP to select another channel which does not overlap with the channel used by the first BSS, includes: the processor 1303 is specifically configured to send a second channel reselecting instruct message to the second AP via the transmitter 1304 to instruct the second AP to reselect another channel which does not overlap with the channel used by the first BSS. Correspondingly, the transmitter 1304 is configured to send the second channel reselecting instruct message to the second AP.

Furthermore, optionally, the receiver 1301 is further configured to: after the transmitter 1304 sends the first channel bandwidth adjusting instruct message to the first AP, receive a first channel bandwidth adjusting response message returned by the first AP; or after the transmitter 1304 sends the second channel bandwidth adjusting instruct message to the second AP, receive a second channel bandwidth adjusting response message returned by the second AP; or after the transmitter 1304 sends the first channel reselecting instruct message to the first AP, receive a first channel reselecting response message returned by the first AP; or after the transmitter 1304 sends the second channel reselecting instruct message to the second AP, receive a second channel reselecting response message returned by the second AP.

In an optional implementation, the bandwidth determining request message includes the priority of the first BSS.

In an optional implementation, the processor 1303 is further configured to: before comparing the priority of the first BSS with the priority of the second BSS, acquire the priority of the first BSS.

Optionally, the processor 1303 is specifically configured to: receive via the receiver 1301, a first notification message sent by the first AP periodically, where the first notification message includes the priority of the first BSS. Correspondingly, the receiver 1301 is further configured to receive the first notification message sent by the first AP periodically.

Or, the processor 1303 is specifically configured to: send a first acquiring request message to the first AP via the transmitter 1304 to request to acquire the priority of the first BSS, and receive via the receiver 1301, a first acquiring response message returned by the first AP for the first acquiring request message, where the first acquiring response message includes the priority of the first BSS. Correspondingly, the transmitter 1304 is further configured to send the first acquiring request message to the first AP; the receiver 1301 is further configured to receive the first acquiring response message returned by the first AP for the first acquiring request message.

In an optional implementation, the processor 1303 is further configured to: before comparing the priority of the first BSS with the priority of the second BSS, acquire the priority of the second BSS.

Optionally, the processor 1303 is specifically configured to: receive via the receiver 1301, a second notification message sent by the second AP periodically, where the second notification message includes the priority of the second BSS. Correspondingly, the receiver 1301 is further configured to receive the second notification message sent by the second AP periodically.

Or, the processor 1303 is specifically configured to: send a second acquiring request message to the second AP via the transmitter 1304 to request to acquire the priority of the second BSS, and receive via the receiver 1301, a second acquiring response message returned by the second AP for the second acquiring request message, where the second acquiring response message includes the priority of the second BSS. Correspondingly, the transmitter 1304 is further configured to send the second acquiring request message to the second AP; the receiver 1301 is further configured to receive the second acquiring response message returned by the second AP for the second acquiring request message.

Furthermore, optionally, the second notification message also includes the channel bandwidth of the second BSS; or the second acquiring response message also includes the channel bandwidth of the second BSS.

Furthermore, optionally, the bandwidth determining request message also includes an identification of the second BSS, providing for the channel bandwidth selecting and controlling unit to determine the second BSS.

Optionally, during a specific implementation, if the receiver 1301, the memory 1302, the processor 1303 and the transmitter 1304 are implemented independently, then the receiver 1301, the memory 1302, the processor 1303 and the transmitter 1304 may be connected to each other via a bus, and communications therebetween may be implemented. The bus may be an ISA bus, a PCI bus, an EISA bus, or the like. The bus may be divided into an address bus, a data bus, a control bus, etc. For ease of representation, only a bold line is used for representation in FIG. 13, but it doesn't mean that there is only one bus or one type of bus.

Optionally, during a specific implementation, if the receiver 1301, the memory 1302, the processor 1303 and the transmitter 1304 are integrated on a chip, then the receiver 1301, the memory 1302, the processor 1303 and the transmitter 1304 may implement communications therebetween via an internal interface.

The channel bandwidth selecting and controlling unit in this embodiment may be implemented by being set in an AC, or may be implemented as the AC, or may also be a dedicated control unit independent from the AC.

The channel bandwidth selecting and controlling unit in this embodiment may be used to perform a flow of a method embodiment as shown in FIG. 9A or FIG. 9B or FIG. 9C, specific working principles thereof will not be repeated, and reference may be made to descriptions of the method embodiment for details.

According to a channel bandwidth selecting and controlling unit provided in this embodiment, when a first BSS needs to select a channel bandwidth, a priority of the first BSS is compared with a priority of a second BSS, and a channel bandwidth of the first BSS is determined based on the comparison result and a channel bandwidth of a neighboring BSS, and thus a BSS with a high priority may be guaranteed preferential occupancy of a large bandwidth, and reasonable allocation of channel bandwidths of BSSs is achieved.

Furthermore, after determining the channel bandwidth of the first BSS, or learning that interference between the two BSSs is greater than a preset threshold according to the bandwidth adjusting request message sent by the first AP or the second AP, or determining that interference between the two BSSs is greater than a preset threshold according to information about the interference between the first BSS and the second BSS sent by the first AP and/or the second AP, the channel bandwidth selecting and controlling unit provided in this embodiment reduces an overlap between the channel bandwidths of the two BSSs by instructing the first AP to reduce the channel bandwidth of the first BSS, instructing the second AP in the second BSS to reduce the channel bandwidth of the second BSS, and reduces interference between the two BSSs by instructing the first AP to select another channel which does not overlap with a channel used by the second BSS and/or instructing the second AP to select another channel which does not overlap with a channel used by the first BSS, and thus a problem of severe interference between neighboring BSSs caused by the neighboring BSSs selecting relatively large channel bandwidths is solved, while the selection of the channel bandwidth of the first BSS is achieved.

Persons of ordinary skill in the art may understand that, all or a part of steps of the foregoing method embodiments may be implemented by a program instructing relevant hardware. The foregoing program may be stored in a computer readable storage medium. When the program runs, the steps of the foregoing method embodiments are performed. The foregoing storage medium includes various mediums capable of storing program codes, such as an ROM, an RAM, a magnetic disk, or an optical disc.

Finally, it should be noted that the foregoing embodiments are merely intended for describing technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all technical features therein; however, these modifications or replacements do not make the essence of corresponding technical solutions depart from the scope of the technical solutions in the embodiments of the present invention

## Claims

1. A method for selecting a channel bandwidth, comprising:
acquiring (101), by a first access point, AP, in a first basic service set, BSS, a priority of a second BSS and a channel bandwidth of the second BSS, wherein a coverage area of the second BSS overlaps with a coverage area of the first BSS;
if a priority of the first BSS is higher than or equal to the priority of the second BSS, determining (102), by the first AP, a channel bandwidth that is greater than or equal to the channel bandwidth of the second BSS as a channel bandwidth of the first BSS, and if the priority of the first BSS is lower than the priority of the second BSS, determining, by the first AP, a channel bandwidth that is less than the channel bandwidth of the second BSS as the channel bandwidth of the first BSS.

2. The method according to claim 1, wherein, after determining the channel bandwidth of the first BSS, the method further comprises:
detecting (103), by the first AP, interference between the first BSS and the second BSS, and if the interference is greater than a preset threshold, performing, by the first AP, at least one of following steps till the interference is less than or equal to the threshold:
reducing the channel bandwidth of the first BSS;
instructing a second AP in the second BSS to reduce the channel bandwidth of the second BSS;
selecting another channel which does not overlap with a channel used by the second BSS; and
instructing the second AP to select another channel which does not overlap with a channel used by the first BSS.

3. The method according to claim 2, wherein the performing, by the first AP, at least one of the following steps till the interference is less than or equal to the threshold comprises:
if the channel used by the first BSS overlaps with the channel used by the second BSS, and the channel bandwidth of the first BSS is greater than the channel bandwidth of the second BSS, reducing, by the first AP, the channel bandwidth of the first BSS till the interference is less than or equal to the threshold, or instructing the second AP to reduce the channel bandwidth of the second BSS till the interference is less than or equal to the threshold, or selecting another channel which does not overlap with the channel used by the second BSS, or instructing the second AP to select another channel which does not overlap with the channel used by the first BSS.

4. The method according to claim 2, wherein the performing, by the first AP, at least one of the following steps till the interference is less than or equal to the threshold comprises:
if the channel used by the first BSS overlaps with the channel used by the second BSS, and the channel bandwidth of the first BSS is less than or equal to the channel bandwidth of the second BSS, instructing, by the first AP, the second AP to reduce the channel bandwidth of the second BSS till the interference is less than or equal to the threshold, or selecting another channel which does not overlap with the channel used by the second BSS, or instructing the second AP to select another channel which does not overlap with the channel used by the first BSS.

5. The method according to any one of claims 1-4, wherein the acquiring (101), by the first AP in the first BSS, the priority of the second BSS and the channel bandwidth of the second BSS comprises:
receiving, by the first AP, a notification message sent by the second AP periodically, wherein the notification message comprises the priority of the second BSS and the channel bandwidth of the second BSS; or
sending, by the first AP, a first acquiring request message to the second AP to acquire the priority of the second BSS and the channel bandwidth of the second BSS, and receiving a first acquiring response message returned by the second AP for the first acquiring request message, wherein the first acquiring response message comprises the priority of the second BSS and the channel bandwidth of the second BSS; or
sending, by the first AP, a second acquiring request message to an access controller, AC, to acquire the priority of the second BSS and the channel bandwidth of the second BSS, and receiving a second acquiring response message returned by the AC for the second acquiring request message, wherein the second acquiring response message comprises the priority of the second BSS and the channel bandwidth of the second BSS, wherein the AC is connected to the first AP and the second AP in a wired manner, respectively; or
sending, by the first AP, a third acquiring request message to a station, STA, which is located within both the coverage area of the first BSS and that of the second BSS to acquire the priority of the second BSS and the channel bandwidth of the second BSS, and receiving a third acquiring response message returned by the STA for the third acquiring request message, wherein the third acquiring response message comprises the priority of the second BSS and the channel bandwidth of the second BSS.

6. An access point, AP, located in a first basic service set, BSS, wherein the AP comprises:
an acquiring module (51), configured to acquire a priority of a second BSS and a channel bandwidth of the second BSS, wherein a coverage area of the second BSS overlaps with a coverage area of the first BSS;
a determining module (52), configured to: when a priority of the first BSS is higher than or equal to the priority of the second BSS, determine a channel bandwidth that is greater than or equal to the channel bandwidth of the second BSS as a channel bandwidth of the first BSS, or when the priority of the first BSS is lower than the priority of the second BSS, determine a channel bandwidth that is less than the channel bandwidth of the second BSS as the channel bandwidth of the first BSS.

7. The AP according to claim 6, further comprising:
a detecting module (53), configured to: after the determining module (52) determines the channel bandwidth of the first BSS, detect interference between the first BSS and the second BSS;
a bandwidth processing module (54), configured to: when the interference is greater than a preset threshold, perform at least one of following steps till the interference is less than or equal to the threshold:
reducing the channel bandwidth of the first BSS;
instructing an AP in the second BSS to reduce the channel bandwidth of the second BSS;
selecting another channel which does not overlap with a channel used by the second BSS; and
instructing the AP in the second BSS to select another channel which does not overlap with a channel used by the first BSS.

8. The AP according to claim 7, wherein the bandwidth processing module (54) is specifically configured to: if the channel used by the first BSS overlaps with the channel used by the second BSS, and the channel bandwidth of the first BSS is greater than the channel bandwidth of the second BSS, reduce the channel bandwidth of the first BSS till the interference is less than or equal to the threshold, or instruct the AP in the second BSS to reduce the channel bandwidth of the second BSS till the interference is less than or equal to the threshold, or select another channel which does not overlap with the channel used by the second BSS, or instruct the AP in the second BSS to select another channel which does not overlap with the channel used by the first BSS.

9. The AP according to claim 7, wherein the bandwidth processing module (54) is specifically configured to: if the channel used by the first BSS overlaps with the channel used by the second BSS, and the channel bandwidth of the first BSS is less than or equal to the channel bandwidth of the second BSS, instruct the AP in the second BSS to reduce the channel bandwidth of the second BSS till the interference is less than or equal to the threshold, or select another channel which does not overlap with the channel used by the second BSS, or instruct the AP in the second BSS to select another channel which does not overlap with the channel used by the first BSS.

10. The AP according to any one of claims 6-9, wherein the acquiring module (51) is specifically configured to receive a notification message sent by the AP in the second BSS periodically, wherein the notification message comprises the priority of the second BSS and the channel bandwidth of the second BSS; or
the acquiring module (51) is specifically configured to send a first acquiring request message to the AP in the second BSS to request to acquire the priority of the second BSS and the channel bandwidth of the second BSS, and receive a first acquiring response message returned by the AP in the second BSS for the first acquiring request message, wherein the first acquiring response message comprises the priority of the second BSS and the channel bandwidth of the second BSS; or
the acquiring module (51) is specifically configured to send a second acquiring request message to an AC to request to acquire the priority of the second BSS and the channel bandwidth of the second BSS, and receive a second acquiring response message returned by the AC for the second acquiring request message, wherein the second acquiring response message comprises the priority of the second BSS and the channel bandwidth of the second BSS; or
the acquiring module (51) is specifically configured to send a third acquiring request message to a STA which is located within both the coverage area of the first BSS and that of the second BSS to request to acquire the priority of the second BSS and the channel bandwidth of the second BSS, and receive a third acquiring response message returned by the STA for the third acquiring request message, wherein the third acquiring response message comprises the priority of the second BSS and the channel bandwidth of the second BSS.

## Patentansprüche

1. Verfahren, um eine Kanalbandbreite auszuwählen, das Folgendes umfasst:
Erfassen (101) in einer ersten Basisdienstgruppe, BSS, einer Priorität einer zweiten BSS und eine Kanalbandbreite der zweiten BSS durch einen ersten Zugangspunkt, AP, wobei ein Abdeckungsbereich der zweiten BSS mit einem Abdeckungsbereich der ersten BSS überlappt;
Bestimmen (102) einer Kanalbandbreite, die größer oder gleich der Kanalbandbreite der zweiten BSS ist, als eine Kanalbandbreite der ersten BSS durch den ersten AP, wenn eine Priorität der ersten BSS höher oder gleich der Priorität der zweiten BSS ist, und Bestimmen einer Kanalbandbreite, die niedriger als die Kanalbandbreite der zweiten BSS ist, als die Kanalbandbreite der ersten BSS durch den ersten AP, wenn die Priorität der ersten BSS niedriger als die Priorität der zweiten BSS ist.

2. Verfahren nach Anspruch 1, wobei das Verfahren nach dem Bestimmen der Kanalbandbreite der ersten BSS ferner Folgendes umfasst:
Detektieren (103) einer Störung zwischen der ersten BSS und der zweiten BSS durch den ersten AP und dann, wenn die Störung größer als ein voreingestellter Schwellenwert ist, Durchführen mindestens eines der folgenden Schritte durch den ersten AP, bis die Störung niedriger oder gleich dem Schwellenwert ist:
Verringern der Kanalbandbreite der ersten BSS;
Anweisen eines zweiten AP in der zweiten BSS, die Kanalbandbreite der zweiten BSS zu verringern;
Auswählen eines weiteren Kanals, der nicht mit einem Kanal überlappt, der durch die zweite BSS verwendet wird; und
Anweisen des zweiten AP, einen weiteren Kanal auszuwählen, der nicht mit einem Kanal, der durch die erste BSS verwendet wird, überlappt.

3. Verfahren nach Anspruch 2, wobei das Durchführen mindestens eines der folgenden Schritte durch den ersten AP, bis die Störung niedriger oder gleich dem Schwellenwert ist, Folgendes umfasst:
Verringern der Kanalbandbreite der ersten BSS, bis die Störung niedriger oder gleich dem Schwellenwert ist, durch den ersten AP oder Anweisen des zweiten AP, die Kanalbandbreite der zweiten BSS zu verringern, bis die Störung niedriger oder gleich dem Schwellenwert ist, oder Auswählen eines weiteren Kanals, der nicht mit dem Kanal, der durch die zweite BSS verwendet wird, überlappt, oder Anweisen des zweiten AP, einen weiteren Kanal auszuwählen, der nicht mit dem Kanal, der durch die erste BSS verwendet wird überlappt, wenn der Kanal, der durch die erste BSS verwendet wird, mit dem Kanal, der durch die zweite BSS verwendet wird, überlappt und die Kanalbandbreite der ersten BSS größer als die Kanalbandbreite der zweiten BSS ist.

4. Verfahren nach Anspruch 2, wobei das Durchführen mindestens eines der folgenden Schritte durch den ersten AP, bis die Störung niedriger oder gleich dem Schwellenwert ist, Folgendes umfasst:
Anweisen des zweiten AP durch den ersten AP, die Kanalbandbreite der zweiten BSS zu verringern, bis die Störung niedriger oder gleich dem Schwellenwert ist, oder Auswählen eines weiteren Kanals, der nicht mit dem Kanal, der durch die zweite BSS verwendet wird, überlappt, oder Anweisen des zweiten AP, einen weiteren Kanal auszuwählen, der nicht mit dem Kanal, der durch die erste BSS verwendet wird, überlappt, wenn der Kanal, der durch die erste BSS verwendet wird, mit dem Kanal, der durch die zweite BSS verwendet wird, überlappt und die Kanalbandbreite der ersten BSS niedriger oder gleich der Kanalbandbreite der zweiten BSS ist.

5. Verfahren nach einem der Ansprüche 1-4, wobei das Erfassen (101) der Priorität der zweiten BSS und der Kanalbandbreite der zweiten BSS durch den ersten AP in der ersten BSS Folgendes umfasst:
Empfangen einer Benachrichtigungsnachricht, die durch den zweiten AP in regelmäßigen Abschnitten gesendet wird, durch den ersten AP, wobei die Benachrichtigungsnachricht die Priorität der zweiten BSS und die Kanalbandbreite der zweiten BSS umfasst; oder
Senden einer ersten Erfassungsanforderungsnachricht durch den ersten AP zu dem zweiten AP, um die Priorität der zweiten BSS und die Kanalbandbreite der zweiten BSS zu erfassen, und Empfangen einer ersten Erfassungsantwortnachricht, die durch den zweiten AP auf die erste Erfassungsanforderungsnachricht zurückgegeben wird, wobei die erste Erfassungsantwortnachricht die Priorität der zweiten BSS und die Kanalbandbreite der zweiten BSS umfasst; oder
Senden einer zweiten Erfassungsanforderungsnachricht an eine Zugangssteuereinheit, AC, durch den ersten AP, um die Priorität der zweiten BSS und die Kanalbandbreite der zweiten BSS zu erfassen, und Empfangen einer zweiten Erfassungsantwortnachricht, die durch die AC auf die zweite Erfassungsanforderungsnachricht zurückgegeben wird, wobei die zweite Erfassungsantwortnachricht die Priorität der zweiten BSS und die Kanalbandbreite der zweiten BSS umfasst und die AC mit dem ersten AP bzw. dem zweiten AP in einer verdrahteten Weise verbunden ist; oder
Senden einer dritten Erfassungsanforderungsnachricht zu einer Station, STA, die sich sowohl in dem Abdeckungsbereich der ersten BSS als auch dem der zweiten BSS befindet durch den ersten AP, um die Priorität der zweiten BSS und die Kanalbandbreite der zweiten BSS zu erfassen, und Empfangen einer dritten Erfassungsantwortnachricht, die durch die STA auf die dritte Erfassungsanforderungsnachricht zurückgegeben wird, wobei die dritte Erfassungsantwortnachricht die Priorität der zweiten BSS und die Kanalbandbreite der zweiten BSS umfasst.

6. Zugangspunkt, AP, der sich in einer ersten Basisdienstgruppe, BSS, befindet, wobei der AP Folgendes umfasst:
ein Erfassungsmodul (51), das konfiguriert ist, eine Priorität einer zweiten BSS und eine Kanalbandbreite der zweiten BSS zu erfassen, wobei ein Abdeckungsbereich der zweiten BSS mit einem Abdeckungsbereich der ersten BSS überlappt;
ein Bestimmungsmodul (52), das konfiguriert ist, eine Kanalbandbreite, die größer oder gleich der Kanalbandbreite der zweiten BSS ist, als eine Kanalbandbreite der ersten BSS zu bestimmen, wenn eine Priorität der ersten BSS höher oder gleich der Priorität der zweiten BSS ist, oder eine Kanalbandbreite, die niedriger als die Kanalbandbreite der zweiten BSS ist, als die Kanalbandbreite der ersten BSS zu bestimmen, wenn die Priorität der ersten BSS niedriger als die Priorität der zweiten BSS ist.

7. AP nach Anspruch 6, der ferner Folgendes umfasst:
ein Detektionsmodul (53), das konfiguriert ist, nachdem das Bestimmungsmodul (52) die Kanalbandbreite der ersten BSS bestimmt hat, eine Störung zwischen der ersten BSS und der zweiten BSS zu detektieren;
ein Bandbreitenverarbeitungsmodul (54), das konfiguriert ist, dann, wenn die Störung größer als ein voreingestellter Schwellenwert ist, mindestens einen der folgenden Schritte durchzuführen, bis die Störung niedriger oder gleich dem Schwellenwert ist:
Verringern der Kanalbandbreite der ersten BSS;
Anweisen eines AP in der zweiten BSS, die Kanalbandbreite der zweiten BSS zu verringern;
Auswählen eines weiteren Kanals, der nicht mit einem Kanal überlappt, der durch die zweite BSS verwendet wird; und
Anweisen des AP in der zweiten BSS, einen weiteren Kanal auszuwählen, der nicht mit einem Kanal, der durch die erste BSS verwendet wird, überlappt.

8. AP nach Anspruch 7, wobei das Bandbreitenverarbeitungsmodul (54) gezielt konfiguriert ist, die Kanalbandbreite der ersten BSS zu verringern, bis die Störung niedriger oder gleich dem Schwellenwert ist, oder den AP in der zweiten BSS anzuweisen, die Kanalbandbreite der zweiten BSS zu verringern, bis die Störung niedriger oder gleich dem Schwellenwert ist, oder einen weiteren Kanal auszuwählen, der nicht mit dem Kanal, der durch die zweite BSS verwendet wird, überlappt, oder den AP in der zweiten BSS anzuweisen, einen weiteren Kanal auszuwählen, der nicht mit dem Kanal, der durch die erste BSS verwendet wird überlappt, wenn der Kanal, der durch die erste BSS verwendet wird, mit dem Kanal, der durch die zweite BSS verwendet wird, überlappt und die Kanalbandbreite der ersten BSS größer als die Kanalbandbreite der zweiten BSS ist.

9. AP nach Anspruch 7, wobei das Bandbreitenverarbeitungsmodul (54) gezielt konfiguriert ist, den AP in der zweiten BSS anzuweisen, die Kanalbandbreite der zweiten BSS zu verringern, bis die Störung niedriger oder gleich dem Schwellenwert ist, oder einen weiteren Kanal auszuwählen, der nicht mit dem Kanal, der durch die zweite BSS verwendet wird, überlappt, oder den AP in der zweiten BSS anzuweisen, einen weiteren Kanal auszuwählen, der nicht mit dem Kanal, der durch die erste BSS verwendet wird, überlappt, wenn der Kanal, der durch die erste BSS verwendet wird, mit dem Kanal, der durch die zweite BSS verwendet wird, überlappt und die Kanalbandbreite der ersten BSS niedriger oder gleich der Kanalbandbreite der zweiten BSS ist.

10. AP nach einem der Ansprüche 6-9, wobei das Erfassungsmodul (51) gezielt konfiguriert ist, eine Benachrichtigungsnachricht, die durch den AP in der zweiten BSS in regelmäßigen Abschnitten gesendet wird, zu empfangen, wobei die Benachrichtigungsnachricht die Priorität der zweiten BSS und die Kanalbandbreite der zweiten BSS umfasst; oder
das Erfassungsmodul (51) gezielt konfiguriert ist, eine erste Erfassungsanforderungsnachricht zu dem AP in der zweiten BSS zu senden, um anzufordern, die Priorität der zweiten BSS und die Kanalbandbreite der zweiten BSS zu erfassen, und eine erste Erfassungsantwortnachricht, die durch den AP in der zweiten BSS auf die erste Erfassungsanforderungsnachricht zurückgegeben wird, zu empfangen, wobei die erste Erfassungsantwortnachricht die Priorität der zweiten BSS und die Kanalbandbreite der zweiten BSS umfasst; oder
das Erfassungsmodul (51) gezielt konfiguriert ist, eine zweite Erfassungsanforderungsnachricht an eine AC zu senden, um die Priorität der zweiten BSS und die Kanalbandbreite der zweiten BSS zu erfassen, und eine zweite Erfassungsantwortnachricht, die durch die AC auf die zweite Erfassungsanforderungsnachricht zurückgegeben wird, zu empfangen, wobei die zweite Erfassungsantwortnachricht die Priorität der zweiten BSS und die Kanalbandbreite der zweiten BSS umfasst; oder das Erfassungsmodul (51) gezielt konfiguriert ist, eine dritte Erfassungsanforderungsnachricht zu einer STA zu senden, die sich sowohl in dem Abdeckungsbereich der ersten BSS als auch dem der zweiten BSS befindet, um anzufordern, die Priorität der zweiten BSS und die Kanalbandbreite der zweiten BSS zu erfassen, und eine dritte Erfassungsantwortnachricht zu empfangen, die durch die STA auf die dritte Erfassungsanforderungsnachricht zurückgegeben wird, wobei die dritte Erfassungsantwortnachricht die Priorität der zweiten BSS und die Kanalbandbreite der zweiten BSS umfasst.

## Revendications

1. Procédé pour sélectionner une largeur de bande de canal, comprenant de :
acquérir (101), par un premier point d'accès, AP, dans un premier ensemble de services de base, BSS, une priorité d'un second BSS et une largeur de bande de canal du second BSS, dans lequel une zone de couverture du second BSS chevauche une zone de couverture du premier BSS ;
si une priorité du premier BSS est supérieure ou égale à la priorité du second BSS, déterminer (102), par le premier AP, une largeur de bande de canal qui est supérieure ou égale à la largeur de bande de canal du second BSS en tant que largeur de bande de canal du premier BSS et, si la priorité du premier BSS est inférieure à la priorité du second BSS, déterminer, par le premier AP, une largeur de bande de canal qui est inférieure à la largeur de bande de canal du second BSS en tant que largeur de bande de canal du premier BSS.

2. Procédé selon la revendication 1, dans lequel, après avoir déterminé la largeur de bande de canal du premier BSS, le procédé comprend en outre de :
détecter (103), par le premier AP, un brouillage entre le premier BSS et le second BSS, et si le brouillage est supérieur à un seuil prédéfini, effectuer, par le premier AP, au moins l'une des étapes suivantes jusqu'à ce que le brouillage soit inférieur à ou égal au seuil :
réduire la largeur de bande de canal du premier BSS ;
ordonner à un second AP dans le second BSS de réduire la largeur de bande de canal du second BSS ;
sélectionner un autre canal qui ne chevauche pas un canal utilisé par le second BSS ; et
ordonner au second AP de sélectionner un autre canal qui ne chevauche pas un canal utilisé par le premier BSS.

3. Procédé selon la revendication 2, dans lequel l'exécution, par le premier AP, d'au moins l'une des étapes suivantes jusqu'à ce que le brouillage soit inférieur ou égal au seuil comprend de :
si le canal utilisé par le premier BSS chevauche le canal utilisé par le second BSS et que la largeur de bande de canal du premier BSS est supérieure à la largeur de bande de canal du second BSS, réduire, par le premier AP, la largeur de bande de canal du premier BSS jusqu'à ce que le brouillage soit inférieur ou égal au seuil, ou ordonner au second AP de réduire la largeur de bande de canal du second BSS jusqu'à ce que le brouillage soit inférieur ou égal au seuil, ou sélectionner un autre canal qui ne chevauche pas le canal utilisé par le second BSS, ou ordonner au second AP de sélectionner un autre canal qui ne chevauche pas le canal utilisé par le premier BSS.

4. Procédé selon la revendication 2, dans lequel l'exécution, par le premier AP, d'au moins l'une des étapes suivantes jusqu'à ce que le brouillage soit inférieur ou égal au seuil comprend de :
si le canal utilisé par le premier BSS chevauche le canal utilisé par le second BSS et que la largeur de bande de canal du premier BSS est inférieure ou égale à la largeur de bande de canal du second BSS, ordonner, par le premier AP, au second AP de réduire la largeur de bande de canal du second BSS jusqu'à ce que le brouillage soit inférieur ou égal au seuil, ou sélectionner un autre canal qui ne chevauche pas le canal utilisé par le second BSS, ou ordonner au second AP de sélectionner un autre canal qui ne chevauche pas le canal utilisé par le premier BSS.

5. Procédé selon l'une quelconque des revendications 1 à 4, dans lequel l'acquisition (101), par le premier AP dans le premier BSS, de la priorité du second BSS et de la largeur de bande de canal du second BSS comprend de :
recevoir, par le premier AP, un message de notification envoyé périodiquement par le second AP, dans lequel le message de notification comprend la priorité du second BSS et la largeur de bande de canal du second BSS ; ou
envoyer, par le premier AP, un premier message de demande d'acquisition au second AP pour acquérir la priorité du second BSS et la largeur de bande de canal du second BSS, et recevoir un premier message de réponse d'acquisition renvoyé par le second AP pour le premier message de demande d'acquisition, dans lequel le premier message de réponse d'acquisition comprend la priorité du second BSS et la largeur de bande de canal du second BSS ; ou
envoyer, par le premier AP, un second message de demande d'acquisition à un contrôleur d'accès, AC, pour acquérir la priorité du second BSS et la largeur de bande de canal du second BSS, et recevoir un second message de réponse d'acquisition renvoyé par l'AC pour le second message de demande d'acquisition, dans lequel le second message de réponse d'acquisition comprend la priorité du second BSS et la largeur de bande de canal du second BSS, dans lequel l'AC est connecté au premier AP et au second AP de manière câblée, respectivement ; ou
envoyer, par le premier AP, un troisième message de demande d'acquisition à une station, STA, qui est située à la fois dans la zone de couverture du premier BSS et dans celle du second BSS pour acquérir la priorité du second BSS et la largeur de bande de canal du second BSS et recevoir un troisième message de réponse d'acquisition renvoyé par le STA pour le troisième message de demande d'acquisition, dans lequel le troisième message de réponse d'acquisition comprend la priorité du second BSS et la largeur de bande de canal du second BSS.

6. Point d'accès, AP, situé dans un premier ensemble de services de base, BSS, dans lequel l'AP comprend :
un module d'acquisition (51) configuré pour acquérir une priorité d'un second BSS et une largeur de bande de canal du second BSS, dans lequel une zone de couverture du second BSS chevauche une zone de couverture du premier BSS ;
un module de détermination (52) configuré pour : lorsqu'une priorité du premier BSS est supérieure ou égale à la priorité du second BSS, déterminer une largeur de bande de canal qui est supérieure ou égale à la largeur de bande de canal du second BSS en tant que largeur de bande de canal du premier BSS, ou lorsque la priorité du premier BSS est inférieure à la priorité du second BSS, déterminer une largeur de bande de canal qui est inférieure à la largeur de bande du second BSS en tant que largeur de bande de canal du premier BSS.

7. AP selon la revendication 6, comprenant en outre :
un module de détection (53) configuré pour : après que le module de détermination (52) a déterminé la largeur de bande de canal du premier BSS, détecter un brouillage entre le premier BSS et le second BSS ;
un module de traitement de bande passante (54) configuré pour : lorsque le brouillage est supérieur à un seuil prédéfini, effectuer au moins l'une des étapes suivantes jusqu'à ce que le brouillage soit inférieur ou égal au seuil :
réduire la largeur de bande de canal du premier BSS ;
ordonner à un AP dans le second BSS de réduire la largeur de bande de canal du second BSS ;
sélectionner un autre canal qui ne chevauche pas un canal utilisé par le second BSS ; et
ordonner à l'AP dans le second BSS de sélectionner un autre canal qui ne chevauche pas un canal utilisé par le premier BSS.

8. AP selon la revendication 7, dans lequel le module de traitement de bande passante (54) est spécifiquement configuré pour : si le canal utilisé par le premier BSS chevauche le canal utilisé par le second BSS, et que la largeur de bande de canal du premier BSS est supérieure à la largeur de bande de canal du second BSS, réduire la largeur de bande de canal du premier BSS jusqu'à ce que le brouillage soit inférieur ou égal au seuil, ou ordonner à l'AP du second BSS de réduire la largeur de bande de canal du second BSS jusqu'à ce que le brouillage soit inférieur à ou égal au seuil, ou sélectionner un autre canal qui ne chevauche pas le canal utilisé par le second BSS, ou ordonner à l'AP dans le second BSS de sélectionner un autre canal qui ne chevauche pas le canal utilisé par le premier BSS.

9. AP selon la revendication 7, dans lequel le module de traitement de bande passante (54) est spécifiquement configuré pour : si le canal utilisé par le premier BSS chevauche le canal utilisé par le second BSS, et que la largeur de bande de canal du premier BSS est inférieure ou égale à la largeur de bande de canal du second BSS, ordonner à l'AP du second BSS de réduire la bande passante de canal du second BSS jusqu'à ce que le brouillage soit inférieur ou égal au seuil, ou sélectionner un autre canal qui ne chevauche pas le canal utilisé par le second BSS, ou ordonner à l'AP dans le second BSS de sélectionner un autre canal qui ne chevauche pas le canal utilisé par le premier BSS.

10. AP selon l'une quelconque des revendications 6 à 9, dans lequel le module d'acquisition (51) est spécifiquement configuré pour recevoir périodiquement un message de notification envoyé par l'AP dans le second BSS, dans lequel le message de notification comprend la priorité du second BSS et la largeur de bande de canal du second BSS ; ou
le module d'acquisition (51) est spécifiquement configuré pour envoyer un premier message de demande d'acquisition à l'AP dans le second BSS pour demander d'acquérir la priorité du second BSS et la largeur de bande de canal du second BSS, et recevoir un premier message de réponse d'acquisition par l'AP dans le second BSS pour le premier message de demande d'acquisition, dans lequel le premier message de réponse d'acquisition comprend la priorité du second BSS et la largeur de bande de canal du second BSS ; ou
le module d'acquisition (51) est spécifiquement configuré pour envoyer un second message de demande d'acquisition à un AC pour demander d'acquérir la priorité du second BSS et la bande passante de canal du second BSS, et recevoir un second message de réponse d'acquisition renvoyé par l'AC pour le second message de demande d'acquisition, dans lequel le second message de réponse d'acquisition comprend la priorité du second BSS et la largeur de bande de canal du second BSS ; ou
le module d'acquisition (51) est spécifiquement configuré pour envoyer un troisième message de demande d'acquisition à une STA qui est située à la fois dans la zone de couverture du premier BSS et dans celle du second BSS pour demander d'acquérir la priorité du second BSS et la bande passante de canal du second BSS, et recevoir un troisième message de réponse d'acquisition renvoyé par la STA pour le troisième message de demande d'acquisition, dans lequel le troisième message de réponse d'acquisition comprend la priorité du second BSS et la largeur de bande de canal du second BSS.
